# EUROPEAN PATENT APPLICATION

(11) **EP 4 600 934 A1**
(43) Date of publication of application: **13.08.2025**
(21) Application number: 22963197.3
(22) Date of filing: 28.10.2022
(51) Int. Cl.: G08G 1/0962, G08G 1/16, B60Q 5/00

(54) **CONTROL METHOD AND APPARATUS, AND VEHICLE**

(71) Applicant: Shenzhen Yinwang Intelligent Technologies Co., Ltd., Shenzhen, Guangdong 518129 (CN)
(72) Inventor: ZHAO, Yang, Shenzhen, Guangdong 518129 (CN); DENG, Jiayu, Shenzhen, Guangdong 518129 (CN); MA, Rui, Shenzhen, Guangdong 518129 (CN)
(74) Representative: Maiwald GmbH
(86) International application number: PCT/CN2022/128404
(87) International publication number: WO 2024/087216

(57) **Abstract**

A control method is provided. The method includes: detecting that a first target is within an alarm range of a carrier (100), where the carrier (100) includes a plurality of sound-making apparatuses (130); and controlling at least two sound-making apparatuses in the plurality of sound-making apparatuses (130) to make alert tones. A sound image shift direction of the alert tone corresponds to a first motion trend, and the first motion trend includes a relative motion trend of the carrier and the first target. The control method may be applied to an intelligent vehicle or an electric vehicle, to help improve driving safety of a user, and help improve an intelligence degree of a carrier. A control apparatus, a control system, a carrier, a computer-readable storage medium, and a chip are further related.

## Description

### TECHNICAL FIELD

Embodiments of this application relate to the field of intelligent driving, and more specifically, to a control method and apparatus, and a carrier.

### BACKGROUND

With intelligence of vehicles, when a user drives a vehicle, the vehicle may actively perform warning for a surrounding target. For example, for a pedestrian or a vehicle crossing in front, an image or a text displayed on a vehicle-mounted display may be used for warning. For another example, for a blind spot warning target, warning may be performed by using an indicator on a rear-view mirror. However, in these warning manners, attention of the user needs to be diverted to the vehicle-mounted display or the rear-view mirror. This is not conducive to driving safety of the user.

### SUMMARY

Embodiments of this application provide a control method and apparatus, and a carrier, to help improve driving safety of a user, and help improve an intelligence degree of the carrier.

The carrier in this application may include a road transportation means, a water transportation means, an air transportation means, an industrial device, an agricultural device, an entertainment device, or the like. For example, the carrier may be a vehicle. The vehicle is a vehicle in a broad sense, and may be a transportation means (like a commercial vehicle, a passenger vehicle, a motorcycle, a flight vehicle, or a train), an industrial vehicle (like a forklift, a trailer, or a tractor), an engineering vehicle (like an excavator, a bulldozer, or a crane), an agricultural device (like a lawn mower or a harvester), an entertainment device, or a toy vehicle. A type of the vehicle is not specifically limited in embodiments of this application. For another example, the carrier may be a transportation means like an aircraft or a ship.

According to a first aspect, a control method is provided. The method includes: detecting that a first target is within an alarm range of a carrier, where the carrier includes a plurality of sound-making apparatuses; and controlling at least two sound-making apparatuses in the plurality of sound-making apparatuses to make alert tones, where a sound image (sound image, or soundstage) shift direction of the alert tone corresponds to a first motion trend, and the first motion trend includes a relative motion trend of the carrier and the first target.

A sound image may be used to represent one or more of a depth, a height, and a width of a sound made by the sound-making apparatus. For example, sound image shift (sound image shift) may be that a sound image position of a sound changes or moves in a direction in a time interval. In this way, a sound image shift alert tone may bring a sense of experience of a change of a sound spatial position to a user.

In this embodiment of this application, the alert tone whose sound image shift direction corresponds to the first motion trend may be used to simulate or express the relative motion trend of the carrier and the target, and the user does not need to determine the motion trend by using another apparatus or device. This helps the user more quickly and safely realize a danger, helps improve driving safety of the user, and helps improve intelligence of the carrier.

In addition, when a plurality of alert tones burst inside the carrier, the user may intuitively determine, by using the sound image shift alert tone, an alert tone that is in the plurality of alert tones and that prompts the relative motion trend of the carrier and the target. For example, in an example in which the carrier is a vehicle, in a lane change scenario, an alert tone whose sound image shift direction corresponds to the first motion trend, a front radar warning alert tone, and a turn light sound may burst. A driver may accurately understand functional semantics corresponding to the alert tone whose sound image shift direction corresponds to the first motion trend. This avoids negative evaluation and confusion understanding of an acoustic alert tone of the vehicle by the driver, and helps improve driving experience of the user.

In some possible implementations, that the sound image shift direction of the alert tone corresponds to the first motion trend may be understood as that the sound image shift direction of the alert tone is consistent with the first motion trend.

In some possible implementations, the relative motion trend of the carrier and the first target may be a motion trend of the carrier relative to the first target, or the relative motion trend of the carrier and the first target may be a motion trend of the first target relative to the carrier.

In some possible implementations, the first target may be a moving target or a static target.

With reference to the first aspect, in some implementations of the first aspect, the method further includes: controlling a sound image shift speed of the alert tone.

In this embodiment of this application, the sound image shift speed of the alert tone is controlled, to help improve flexibility of alert tone control.

In some possible implementations, an increasingly fast sound image shift speed of the alert tone may indicate that an increasingly close distance between the target and the carrier.

In some possible implementations, a faster sound image shift speed of the alert tone may indicate shorter collision time (time to collision, TTC) between the target and the carrier.

With reference to the first aspect, in some implementations of the first aspect, the controlling a sound image shift speed of the alert tone includes: controlling the sound image shift speed of the alert tone based on information between the carrier and the first target.

In this embodiment of this application, the sound image shift speed of the alert tone may be controlled based on the information between the carrier and the first target. In this way, the user may intuitively determine, by using the sound image shift speed of the alert tone, an information change status between the carrier and the target or a danger degree of the target, to control the carrier to avoid collision with the target. This helps improve safety of the carrier and improve driving experience of the user.

With reference to the first aspect, in some implementations of the first aspect, the information between the carrier and the first target includes at least one of the first motion trend, an alarm level, a distance between the carrier and the first target, and TTC between the carrier and the first target.

In this embodiment of this application, the sound image shift speed of the alert tone is controlled, the user can intuitively determine the first motion trend, the alarm level, the distance between the carrier and the first target, or the TTC between the carrier and the first target, to control the carrier to avoid collision with the target. This improves safety of the carrier and improves driving experience of the user.

With reference to the first aspect, in some implementations of the first aspect, the method further includes: determining, based on a position of a prompted user, a sound-making apparatus located at an end of the sound image shift direction in the at least two sound-making apparatuses.

In this embodiment of this application, the sound-making apparatus located at the end of the sound image shift direction in the at least two sound-making apparatuses is associated with the position of the prompted user. In this way, the prompted user quickly understands, based on an alert tone whose sound image shift is in a direction of the position of the user, that there may be a target that poses a danger to the user. This helps improve security awareness of the user, to help avoid a security accident.

With reference to the first aspect, in some implementations of the first aspect, the method further includes: determining, based on an orientation of the first target relative to the carrier in a case in which the first target enters the alarm range, a sound-making apparatus located at a start of the sound image shift direction in the at least two sound-making apparatuses.

In this embodiment of this application, in the at least two sound-making apparatuses, the sound-making apparatus located at the start of the sound image shift direction is associated with the orientation of the first target relative to the carrier in a case in which the first target enters the alarm range. In this way, the user may determine, based on the sound-making apparatus at the start, the orientation of the first target relative to the carrier in a case in which the first target enters the alarm range, so that the orientation of the first target can be observed in advance. This helps avoid occurrence of a safety accident.

With reference to the first aspect, in some implementations of the first aspect, the method further includes: predicting the first motion trend based on a status of the first target; and the controlling at least two sound-making apparatuses in the plurality of sound-making apparatuses to make alert tones includes: controlling, based on the predicted first motion trend, the at least two sound-making apparatuses in the plurality of sound-making apparatuses to make the alert tones.

In this embodiment of this application, the first motion trend may be predicted based on the status of the first target, so that the at least two sound-making apparatuses may be controlled, based on the predicted first motion trend, to make sound image shift alert tones. In this way, the user may learn of a motion trend of the first target in a future time period by using the alert tone whose sound image shift direction corresponds to the first motion trend, to help the user make a driving decision in advance. This helps avoid collision between the carrier and the first target, and improves driving safety of the user.

In some possible implementations, the method further includes: obtaining the status of the first target when detecting that the first target enters the alarm range of the carrier.

In some possible implementations, the status of the first target includes one or more of a speed, an acceleration, a speed direction, a yaw angle direction, or a yaw angular velocity of the first target.

With reference to the first aspect, in some implementations of the first aspect, the method further includes: when the predicted first motion trend is different from an actual relative motion trend of the first target and the carrier, controlling at least two sound-making apparatuses in the plurality of sound-making apparatuses to make alert tones whose sound image shift directions correspond to the actual relative motion trend.

In this embodiment of this application, when the predicted first motion trend is different from the actual relative motion trend, the at least two sound-making apparatuses in the plurality of sound-making apparatuses may be controlled to make the alert tones whose sound image shift directions correspond to the actual relative motion trend. In this way, alert tones in different sound image shift directions are switched, the user can intuitively determine that the motion trend of the first target relative to the carrier changes. The user may learn of the actual relative motion trend in time based on an alert tone obtained after a sound image shift direction is switched, to help the user make a driving decision in advance. This helps avoid collision between the carrier and the first target, and helps improve driving safety of the user.

With reference to the first aspect, in some implementations of the first aspect, the method further includes: determining the first motion trend based on first data collected by a sensor of the carrier; or obtaining second data sent by a cloud server, and determining the first motion trend based on the second data.

In this embodiment of this application, the carrier may determine the first motion trend based on the first data collected by the sensor, or determine the first motion trend based on the second data sent by the server, to control the at least two sound-making apparatuses to make alert tones. This helps improve driving safety of the user, and also helps improve intelligence of the carrier.

In some possible implementations, the first motion trend determined based on the first data collected by the sensor or the first motion trend determined based on the second data sent by the server may be an actual motion trend of the first target relative to the carrier, or may be an actual motion trend of the carrier relative to the first target.

With reference to the first aspect, in some implementations of the first aspect, the determining the first motion trend based on first data collected by a sensor of the carrier includes: determining orientations of the first target at a plurality of time points based on the first data; and determining the first motion trend based on the orientations of the first target at the plurality of time points.

With reference to the first aspect, in some implementations of the first aspect, the carrier includes a mapping relationship between a motion trend and a sound-making apparatus, and the method further includes: determining the at least two sound-making apparatuses based on the mapping relationship and the first motion trend.

In this embodiment of this application, the at least two sound-making apparatuses may be determined based on the first motion trend and the mapping relationship between a motion trend and a sound-making apparatus that is stored in the carrier. In this way, calculation overheads for determining the at least two sound-making apparatuses from the plurality of sound-making apparatuses can be reduced, and power consumption of the carrier can be reduced.

With reference to the first aspect, in some implementations of the first aspect, the method further includes: controlling a lighting direction of an atmosphere light, where the lighting direction of the atmosphere light corresponds to the first motion trend, and the carrier includes the atmosphere light; and/or controlling a vibration direction of a steering wheel, where the vibration direction corresponds to the first motion trend, and the carrier includes the steering wheel; and/or controlling a display apparatus to display prompt information, where the prompt information indicates the first motion trend, and the carrier includes the display apparatus.

In this embodiment of this application, at least one of the atmosphere light, the steering wheel, and the display apparatus may be further controlled when the at least two sound-making apparatuses are controlled to make alert tones. In a multi-component joint prompting manner, the user can further determine the first motion trend, to help improve driving safety of the user.

With reference to the first aspect, in some implementations of the first aspect, the detecting that a first target is within an alarm range of a carrier includes: when the distance between the carrier and the first target is less than or equal to a preset distance, and/or the TTC between the carrier and the first target is less than or equal to preset duration, detecting that the first target is within the alarm range of the carrier.

In this embodiment of this application, whether the first target enters the alarm range of the carrier may be determined based on the distance and the TTC. In this way, a target within the alarm range may be prompted by using the sound image shift alert tone. This helps the user intuitively determine a motion trend of the target within the alarm range, helps improve driving safety of the user, and also helps improve an intelligence degree of the carrier.

With reference to the first aspect, in some implementations of the first aspect, the controlling at least two sound-making apparatuses in the plurality of sound-making apparatuses to make alert tones includes: controlling intensity of sounds made by sound-making apparatuses in the at least two sound-making apparatuses, and/or controlling delays of the sounds made by the sound-making apparatuses in the at least two sound-making apparatuses.

With reference to the first aspect, in some implementations of the first aspect, the plurality of sound-making apparatuses are located in a cockpit of the carrier.

In some possible implementations, the plurality of sound-making apparatuses may also be located outside the cockpit of the carrier.

According to a second aspect, a control apparatus is provided. The apparatus includes: a detection unit, configured to detect that a first target is within an alarm range of a carrier, where the carrier includes a plurality of sound-making apparatuses; and a control unit, configured to control at least two sound-making apparatuses in the plurality of sound-making apparatuses to make alert tones, where a sound image shift direction of the alert tone corresponds to a first motion trend, and the first motion trend includes a relative motion trend of the carrier and the first target.

With reference to the second aspect, in some implementations of the second aspect, the control unit is further configured to control a sound image shift speed of the alert tone.

With reference to the second aspect, in some implementations of the second aspect, the control unit is configured to control the sound image shift speed of the alert tone based on information between the carrier and the first target.

With reference to the second aspect, in some implementations of the second aspect, the information between the carrier and the first target includes at least one of the first motion trend, an alarm level, a distance between the carrier and the first target, and time to collision TTC between the carrier and the first target.

With reference to the second aspect, in some implementations of the second aspect, the apparatus further includes: a first determining unit, configured to determine, based on a position of a prompted user, a sound-making apparatus located at an end of the sound image shift direction in the at least two sound-making apparatuses.

With reference to the second aspect, in some implementations of the second aspect, the apparatus further includes: a second determining unit, configured to determine, based on an orientation of the first target relative to the carrier in a case in which the first target enters the alarm range, a sound-making apparatus located at a start of the sound image shift direction in the at least two sound-making apparatuses.

With reference to the second aspect, in some implementations of the second aspect, the apparatus further includes: a prediction unit, configured to predict the first motion trend based on a status of the first target. The control unit is configured to control, based on the predicted first motion trend, the at least two sound-making apparatuses in the plurality of sound-making apparatuses to make the alert tones.

With reference to the second aspect, in some implementations of the second aspect, the control unit is further configured to: when the predicted first motion trend is different from an actual relative motion trend of the first target and the carrier, control at least two sound-making apparatuses in the plurality of sound-making apparatuses to make alert tones whose sound image shift directions correspond to the actual relative motion trend.

With reference to the second aspect, in some implementations of the second aspect, the apparatus further includes: a third determining unit, configured to determine the first motion trend based on first data collected by a sensor of the carrier; or the third determining unit, configured to obtain second data sent by a cloud server, and determine the first motion trend based on the second data.

With reference to the second aspect, in some implementations of the second aspect, the third determining unit is configured to: determine orientations of the first target at a plurality of time points based on the first data; and determine the first motion trend based on the orientations of the first target at the plurality of time points.

With reference to the second aspect, in some implementations of the second aspect, the carrier includes a mapping relationship between a motion trend and a sound-making apparatus, and the method further includes: determining the at least two sound-making apparatuses based on the mapping relationship and the first motion trend.

With reference to the second aspect, in some implementations of the second aspect, the control unit is further configured to: control a lighting direction of an atmosphere light, where the lighting direction of the atmosphere light corresponds to the first motion trend, and the carrier includes the atmosphere light; and/or control a vibration direction of a steering wheel, where the vibration direction corresponds to the first motion trend, and the carrier includes the steering wheel; and/or control a display apparatus to display prompt information, where the prompt information indicates the first motion trend, and the carrier includes the display apparatus.

With reference to the second aspect, in some implementations of the second aspect, the detection unit is configured to: when the distance between the carrier and the first target is less than or equal to a preset distance, and/or the TTC between the carrier and the first target is less than or equal to preset duration, detect that the first target is within the alarm range of the carrier.

With reference to the second aspect, in some implementations of the second aspect, the control unit is configured to: control intensity of sounds made by sound-making apparatuses in the at least two sound-making apparatuses, and/or control delays of the sounds made by the sound-making apparatuses in the at least two sound-making apparatuses.

With reference to the second aspect, in some implementations of the second aspect, the plurality of sound-making apparatuses are located in a cockpit of the carrier.

According to a third aspect, a control method is provided. The method includes: detecting that a first target is within an alarm range of a carrier, where the carrier includes an atmosphere light; and controlling a lighting direction of the atmosphere light, where the lighting direction of the atmosphere light corresponds to a first motion trend, and the first motion trend includes a relative motion trend of the carrier and the first target.

With reference to the third aspect, in some implementations of the third aspect, the method further includes: controlling a lighting speed of the atmosphere light.

With reference to the third aspect, in some implementations of the third aspect, the controlling a lighting speed of the atmosphere light includes: controlling the lighting speed of the atmosphere light based on information between the carrier and the first target.

With reference to the third aspect, in some implementations of the third aspect, the information between the carrier and the first target includes at least one of the first motion trend, an alarm level, a distance between the carrier and the first target, and TTC between the carrier and the first target.

With reference to the third aspect, in some implementations of the third aspect, the method further includes: determining the first motion trend based on first data collected by a sensor of the carrier; or obtaining second data sent by a cloud server, and determining the first motion trend based on the second data.

With reference to the third aspect, in some implementations of the third aspect, the determining the first motion trend based on first data collected by a sensor of the carrier includes: determining orientations of the first target at a plurality of time points based on the first data; and determining the first motion trend based on the orientations of the first target at the plurality of time points.

With reference to the third aspect, in some implementations of the third aspect, the detecting that a first target is within an alarm range of a carrier includes: when the distance between the carrier and the first target is less than or equal to a preset distance, and/or the TTC between the carrier and the first target is less than or equal to preset duration, detecting that the first target is within the alarm range of the carrier.

According to a fourth aspect, a control apparatus is provided. The apparatus includes: a detection unit, configured to detect that a first target is within an alarm range of a carrier, where the carrier includes an atmosphere light; and a control unit, configured to control a lighting direction of the atmosphere light, where the lighting direction of the atmosphere light corresponds to a first motion trend, and the first motion trend includes a relative motion trend of the carrier and the first target.

With reference to the fourth aspect, in some implementations of the fourth aspect, the control unit is further configured to control a lighting speed of the atmosphere light.

With reference to the fourth aspect, in some implementations of the fourth aspect, the control unit is configured to control the lighting speed of the atmosphere light based on information between the carrier and the first target.

With reference to the fourth aspect, in some implementations of the fourth aspect, the information between the carrier and the first target includes at least one of the first motion trend, an alarm level, a distance between the carrier and the first target, and time to collision TTC between the carrier and the first target.

With reference to the fourth aspect, in some implementations of the fourth aspect, the apparatus further includes: a determining unit, configured to: determine the first motion trend based on first data collected by a sensor of the carrier; or obtaining second data sent by a cloud server, and determining the first motion trend based on the second data.

With reference to the fourth aspect, in some implementations of the fourth aspect, the determining unit is configured to: determine orientations of the first target at a plurality of time points based on the first data; and determine the first motion trend based on the orientations of the first target at the plurality of time points.

With reference to the fourth aspect, in some implementations of the fourth aspect, the detection unit is configured to: when the distance between the carrier and the first target is less than or equal to a preset distance, and/or the TTC between the carrier and the first target is less than or equal to preset duration, detect that the first target is within the alarm range of the carrier.

According to a fifth aspect, a control apparatus is provided. The control apparatus includes a processing unit and a storage unit. The storage unit is configured to store instructions, and the processing unit executes the instructions stored in the storage unit, so that the control apparatus performs any possible method in the first aspect or the third aspect.

According to a sixth aspect, a control system is provided. The system includes at least two sound-making apparatuses and a computing platform. The computing platform includes any one of the possible apparatuses in the second aspect or the fourth aspect, or the computing platform includes the apparatus in the fifth aspect.

In some possible implementations, the control system further includes one or more sensors.

According to a seventh aspect, a carrier is provided. The carrier includes any one of the possible apparatuses in the second aspect, or includes the apparatus in the fourth aspect, or includes the apparatus in the fifth aspect, or includes the system in the sixth aspect.

In some possible implementations, the carrier is a vehicle.

According to an eighth aspect, a computer program product is provided. The computer program product includes computer program code. When the computer program code is run on a computer, the computer is enabled to perform any possible method in the first aspect or the third aspect.

It should be noted that all or some of the computer program code may be stored in a first storage medium. The first storage medium may be packaged together with a processor, or may be packaged separately from a processor. This is not specifically limited in embodiments of this application.

According to a ninth aspect, a computer-readable medium is provided. The computer-readable medium stores program code. When the computer program code is run on a computer, the computer is enabled to perform any possible method in the first aspect or the third aspect.

According to a tenth aspect, an embodiment of this application provides a chip system. The chip system includes a processor, configured to invoke a computer program or computer instructions stored in a memory, so that the processor performs any possible method in the first aspect or the third aspect.

With reference to the tenth aspect, in a possible implementation, the processor is coupled to the memory through an interface.

With reference to the tenth aspect, in a possible implementation, the chip system further includes the memory. The memory stores the computer program or computer instructions.

In embodiments of this application, the alert tone whose sound image shift direction corresponds to the first motion trend may be used to simulate or express relative motion trend information of the carrier and the target, and the user does not need to determine the motion trend by using another apparatus or device. This helps the user more quickly and safely realize a danger, helps improve driving safety of the user, and helps improve intelligence of the carrier. In addition, when a plurality of alert tones burst inside the carrier, the user may intuitively determine, by using the sound image shift alert tone, an alert tone that is in the plurality of alert tones and that prompts the relative motion trend of the carrier and the target.

The sound image shift speed of the alert tone is controlled, to help improve flexibility of alert tone control.

The sound image shift speed of the alert tone is controlled, the user can intuitively determine the first motion trend, the alarm level, the distance between the carrier and the first target, or the TTC between the carrier and the first target, to control the carrier to avoid collision with the target. This improves safety of the carrier and improves driving experience of the user.

The sound-making apparatus located at the end of the sound image shift direction in the at least two sound-making apparatuses is associated with the position of the prompted user, and the prompted user quickly understands, based on an alert tone whose sound image shift is in a direction of the position of the user, that there may be a target that poses a danger to the user. This helps improve security awareness of the user, to help avoid a security accident.

In the at least two sound-making apparatuses, the sound-making apparatus located at the start of the sound image shift direction is associated with the orientation of the first target relative to the carrier in a case in which the first target enters the alarm range. The user may determine, based on the sound-making apparatus at the start, the orientation of the first target relative to the carrier in a case in which the first target enters the alarm range, so that the orientation of the first target can be observed in advance. This helps avoid occurrence of a safety accident.

The first motion trend may be predicted based on the status of the first target. In this way, the user may learn of a motion trend of the first target in a future time period by using the alert tone whose sound image shift direction corresponds to the first motion trend, to help the user make a driving decision in advance.

Alert tones in different sound image shift directions are switched, the user can intuitively determine that the motion trend of the first target relative to the carrier changes. The user may learn of the actual relative motion trend in time based on an alert tone obtained after a sound image shift direction is switched, to help the user make a driving decision in advance.

The at least two sound-making apparatuses may be determined based on the first motion trend and the mapping relationship between a motion trend and a sound-making apparatus that is stored in the carrier. In this way, calculation overheads for determining the at least two sound-making apparatuses from the plurality of sound-making apparatuses can be reduced, and power consumption of the carrier can be reduced.

In the multi-component joint prompting manner, the user can further determine the first motion trend, to help improve driving safety of the user and also help improve an intelligence degree of the carrier.

### BRIEF DESCRIPTION OF DRAWINGS

FIG. 1 is a functional block diagram of a carrier according to an embodiment of this application;
FIG. 2 is a diagram of a structure of a vehicle according to an embodiment of this application;
FIG. 3 is a diagram of an application scenario according to an embodiment of this application;
FIG. 4 is a diagram of an alarm range of a vehicle according to an embodiment of this application;
FIG. 5 is a diagram of a correspondence between a loudspeaker and an orientation of a target according to an embodiment of this application;
FIG. 6 is a diagram of another application scenario according to an embodiment of this application;
FIG. 7 is a diagram of an alarm range division manner according to an embodiment of this application;
FIG. 8 is a diagram of making, by at least two loudspeakers, alert tones whose sound images can shift according to an embodiment of this application;
FIG. 9 is a diagram of another application scenario according to an embodiment of this application;
FIG. 10 is a diagram of loudspeaker distribution according to an embodiment of this application;
FIG. 11 is a diagram of another application scenario according to an embodiment of this application;
FIG. 12 is a diagram of another application scenario according to an embodiment of this application;
FIG. 13 is a diagram of prompting a user by using a sound image shift alert tone and an atmosphere light according to an embodiment of this application;
FIG. 14 is a diagram of prompting a user by using a sound image shift alert tone and steering wheel vibration according to an embodiment of this application;
FIG. 15 is a schematic flowchart of a control method according to an embodiment of this application;
FIG. 16 is a block diagram of a control apparatus according to an embodiment of this application; and
FIG. 17 is a block diagram of a control system according to an embodiment of this application.

### DESCRIPTION OF EMBODIMENTS

The following describes the technical solutions in embodiments of this application with reference to the accompanying drawings in embodiments of this application. In descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists.

Prefix words "first", "second", and the like in embodiments of this application are merely intended to distinguish between different described objects, and impose no limitation on locations, sequences, priorities, quantities, content, or the like of the described objects. Use of prefixes such as ordinal numbers used to distinguish the described objects in embodiments of this application does not constitute a limitation on the described objects. For description of the described objects, refer to the context description in claims or embodiments, and the use of such prefixes should not constitute a redundant limitation. In addition, in description of embodiments, unless otherwise specified, "a plurality of" means two or more.

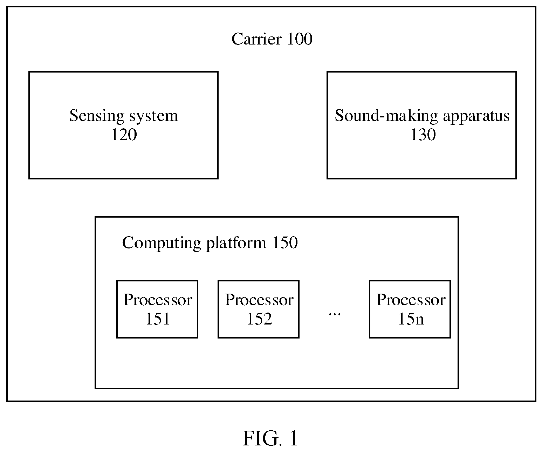

FIG. 1 is a functional block diagram of a carrier 100 according to an embodiment of this application. The carrier 100 may include a sensing system 120, a sound-making apparatus 130, and a computing platform 150. The sensing system 120 may include one or more sensors that sense information about an ambient environment of the carrier 100. For example, the sensing system 120 may include a positioning system. The positioning system may be a global positioning system (global positioning system, GPS), a BeiDou system, or another positioning system. The sensing system 120 may further include one or more of an inertial measurement unit (inertial measurement unit, IMU), a lidar, a millimeter-wave radar, an ultrasonic radar, and a camera apparatus.

Some or all functions of the carrier 100 can be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to execute the instructions, so as to implement corresponding functions.

As described above, with intelligence of a vehicle, when a user drives the vehicle, the vehicle may actively perform warning for a surrounding target. For example, for a pedestrian or a vehicle in front of the vehicle, an image or a text displayed on a vehicle-mounted display may be used for warning. For another example, for a blind spot warning target, warning may be performed by using an indicator on a rear-view mirror. However, in these warning manners, attention of the user needs to be diverted to the vehicle-mounted display or the rear-view mirror, which is not conducive to driving safety of the user.

Embodiments of this application provide a control method and apparatus, and a carrier. At least two sound-making apparatuses in the carrier are controlled to make alert tones whose sound image shift directions correspond to a relative motion trend of the carrier and a target. In this way, the user can learn of the motion trend based on the sound image shift direction of the alert tone without affecting attention. This helps improve driving safety of the user, and also helps improve an intelligence degree of the carrier.

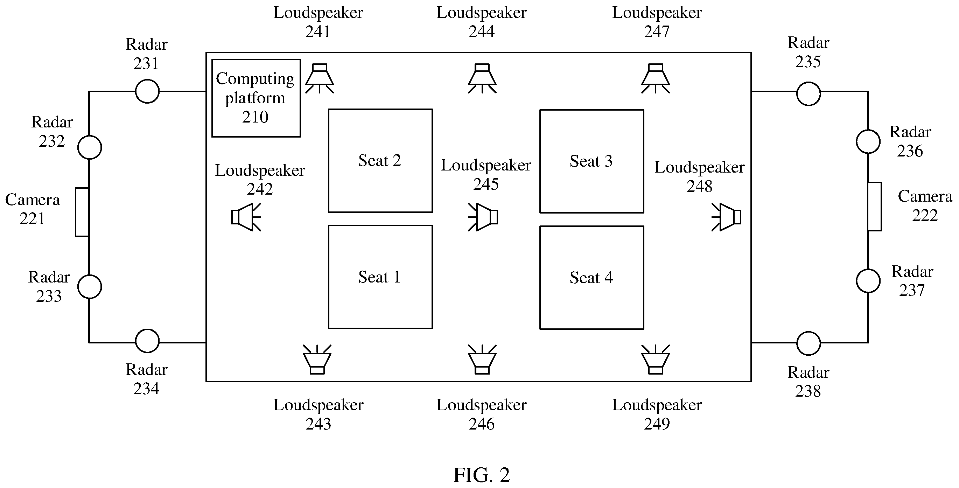

For example, the carrier 100 is a vehicle. FIG. 2 is a diagram of a structure of a vehicle 200 according to an embodiment of this application. As shown in FIG. 2, the vehicle 200 includes a computing platform 210, cameras 221 and 222 located outside a cockpit, radars 231 to 238, and loudspeakers 241 to 249 located inside the cockpit. The computing platform 210 may determine, based on data collected by the cameras 221 and 222 outside the cockpit and the radars 231 to 238, whether a target enters an alarm range of the vehicle 200. When the target enters the alarm range of the vehicle 200, the computing platform 210 may control at least two loudspeakers of the loudspeakers 241 to 249 to make alert tones. A sound image shift direction of the alert tone corresponds to a relative motion trend of the target and the vehicle 200, or a sound image shift direction of the alert tone corresponds to a motion trend of the target.

The relative motion trend of the target and the vehicle 200 may be a motion trend of the target relative to the vehicle 200, or may be a motion trend of the vehicle 200 relative to the target.

The motion trend of the target may be a motion trend of the target not relative to any reference object.

In FIG. 2, a seat 1 may be a seat in a driver area, a seat 2 may be a seat in a front passenger area, a seat 3 may be a seat in a right area of a second row, and a seat 4 may be a seat in a left area of the second row.

The computing platform 210 may be the computing platform 150 in FIG. 1, the cameras 221 and 222 and the radars 231 to 238 may be located in the sensing system 120 in FIG. 1, and the loudspeakers 241 to 249 may be located in the sound-making apparatus 130 in FIG. 1.

In FIG. 2, an example in which the vehicle 200 includes two cameras, eight radars, and nine loudspeakers is used for description. A quantity of cameras, radars, and loudspeakers in the vehicle 200 is not specifically limited in this embodiment of this application.

The loudspeaker 241 is used as an example, and there may be one or more loudspeakers at a position of the loudspeaker 241. For example, when there are a plurality of loudspeakers at the position of the loudspeaker 241, the plurality of loudspeakers may form a loudspeaker group.

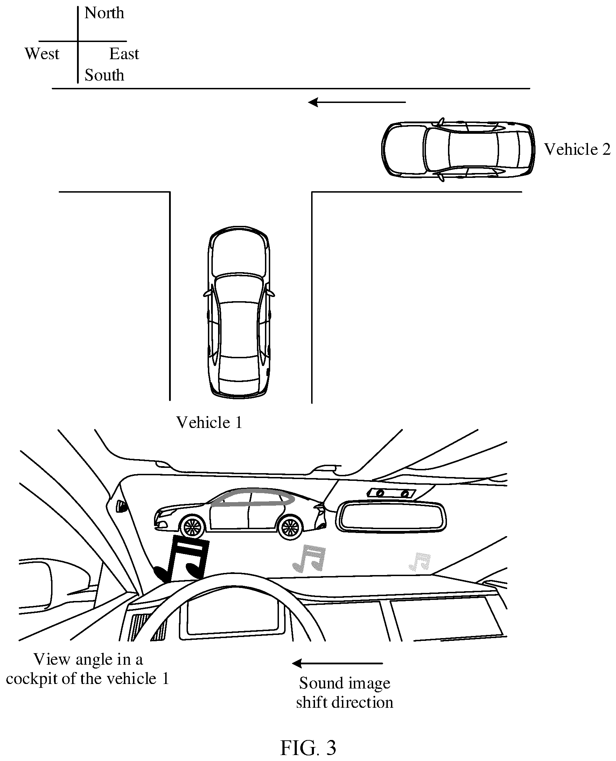

FIG. 3 is a diagram of an application scenario according to an embodiment of this application. The application scenario is a front cross traffic alert (front cross traffic alert) scenario. A vehicle 1 may collect information about a vehicle 2 by using a camera and a radar. For example, the information about the vehicle 2 includes information such as a distance between the vehicle 2 and the vehicle 1, a speed of the vehicle 2, a speed direction of the vehicle 2, and a yaw angle of the vehicle 2. When it is detected that the vehicle 2 enters an alarm range of the vehicle 1, the vehicle 1 may control at least two loudspeakers in the vehicle 1 to make alert tones. A sound image shift direction of the alert tone corresponds to a relative motion trend of the vehicle 2 and the vehicle 1, or a sound image shift direction of the alert tone corresponds to a motion trend of the vehicle 2.

The relative motion trend of the vehicle 2 and the vehicle 1 may be a motion trend of the vehicle 2 relative to the vehicle 1, or may be a motion trend of the vehicle 1 relative to the vehicle 2. In the following embodiment, the motion trend of the vehicle 2 relative to the vehicle 1 is used as an example for description.

For example, as shown in FIG. 3, the motion trend of the vehicle 2 relative to the vehicle 1 is traveling from east to west. In this case, the vehicle 1 may control loudspeakers 241 to 243 to make alert tones. A sound image shift direction of the alert tone is from east to west, or a sound image shift direction of the alert tone is from a front passenger area to a driver area, or a sound image shift direction of the alert tone is from the loudspeaker 241 to the loudspeaker 243.

For another example, the vehicle 1 may also control loudspeakers 244 to 246 to make alert tones, and a sound image shift direction of the alert tone is from east to west.

For another example, the vehicle 1 may also control loudspeakers 247 to 249 to make alert tones, and a sound image shift direction of the alert tone is from east to west.

In this way, a driver can accurately learn of the motion trend of the vehicle 2 relative to the vehicle 1 based on the sound image shift direction of the alert tone, so that the driver can control the vehicle 1 based on the motion trend of the vehicle 2 relative to the vehicle 1. This helps improve driving safety of a user, and also helps improve an intelligence degree of the vehicle.

In addition, when a plurality of alert tones burst inside the vehicle 1, the user may accurately learn of, based on a sound image shift alert tone, an alert tone that is in the plurality of alert tones and that prompts the relative motion trend of the vehicle 2 and the vehicle 1. For example, in a lane change scenario of the vehicle 1, an alert tone whose sound image shift direction corresponds to the relative motion trend of the vehicle 2 and the vehicle 1, a front radar warning alert tone, and a turn light sound may burst. The driver may accurately understand functional semantics corresponding to the alert tone whose sound image shift direction corresponds to the relative motion trend. This avoids negative evaluation and confusion understanding of an acoustic alert tone of the vehicle by the driver, and helps improve driving experience of the user.

In an embodiment, that the vehicle 1 may control at least two loudspeakers in the vehicle 1 to make alert tones includes: The vehicle 1 controls play intensity of sounds made by the at least two loudspeakers.

An example of controlling the loudspeakers 241 to 243 is used. The vehicle 1 may control that there is no delay between sounds made by the loudspeakers 241 to 243, and control the sounds made by the loudspeakers 241 to 243 to be played at different intensity. For example, at a time point T₁, play intensity of the sound made by the loudspeaker 241 may be controlled to be 40 dB, play intensity of the sound made by the loudspeaker 242 may be controlled to be 20 dB, and play intensity of the sound made by the loudspeaker 243 may be controlled to be 20 dB. At a time point T₂ after the time point T₁, the play intensity of the sound made by the loudspeaker 241 may be controlled to be 20 dB, the play intensity of the sound made by the loudspeaker 242 may be controlled to be 40 dB, and the play intensity of the sound made by the loudspeaker 243 may be controlled to be 20 dB. At a time point T₃ after the time point T₂, the play intensity of the sound made by the loudspeaker 241 may be controlled to be 20 dB, the play intensity of the sound made by the loudspeaker 242 may be controlled to be 20 dB, and the play intensity of the sound made by the loudspeaker 243 may be controlled to be 40 dB. Therefore, the loudspeakers 241 to 243 may be controlled to make alert tones whose sound image shift directions are from east to west, or make alert tones whose sound image shift directions are from the loudspeaker 241 to the loudspeaker 243.

In an embodiment, there may be one or more loudspeakers at a position of the loudspeaker 241, the loudspeaker 242, or the loudspeaker 244. For example, there are a plurality of loudspeakers at the position of the loudspeaker 241. That the play intensity of the sound made by the loudspeaker 241 is controlled to be 40 dB includes: Play intensity of a sound made by at least some of the plurality of loudspeakers is controlled to be 40 dB.

In an embodiment, a time interval between the time point T₁ and the time point T₂ and a time interval between the time point T₂ and the time point T₃ may be equal, or may be unequal. For example, if the time interval between the time point T₁ and the time point T₂ is equal, and the time interval between the time point T₂ and the time point T₃ is equal, the time interval may be 10 milliseconds (millisecond, ms).

In an embodiment, the vehicle 1 may play the alert tone for preset duration.

For example, the preset duration includes a plurality of broadcast periodicities, and in each broadcast periodicity, the loudspeakers 241 to 243 may be controlled to make alert tones whose sound image shift directions are from east to west.

In an embodiment, before the preset duration ends, if it is detected that the vehicle 2 travels out of an alarm range of the vehicle 1, the loudspeakers 241 to 243 may be further controlled to make alert tones until the preset duration ends. Alternatively, after the alert tones are played in a broadcast periodicity of a time point at which the vehicle 2 travels out of the alarm range of the vehicle 1, the alert tones may be stopped.

In an embodiment, the time point T₁ may be a time point at which it is detected that the vehicle 2 enters the alarm range of the vehicle 1.

In an embodiment, that the vehicle 1 may control at least two loudspeakers in the vehicle 1 to make alert tones includes: The vehicle 1 controls delays of sounds made by the at least two loudspeakers.

An example of controlling the loudspeakers 241 to 243 is used. The vehicle 1 may control sounds made by the loudspeakers 241 to 243 to be played at same intensity and have different delays. For example, at a time point T₁, the play intensity of the sound made by the loudspeaker 241 may be controlled to be 20 dB, and the loudspeaker 242 and the loudspeaker 243 may be controlled not to make sounds; at a time point T₁+ΔT, the play intensity of the sound made by the loudspeaker 242 is controlled to be 20 dB, and the loudspeaker 241 and the loudspeaker 243 are controlled not to make sounds; and at a time point T₁+2ΔT, the play intensity of the sound made by the loudspeaker 243 is controlled to be 20 dB, and the loudspeaker 241 and the loudspeaker 242 are controlled not to make sounds. Therefore, the loudspeakers 241 to 243 may be controlled to make alert tones whose sound image shift directions are from east to west, or make alert tones whose sound image shift directions are from the loudspeaker 241 to the loudspeaker 243.

In an embodiment, that the vehicle 1 may control at least two loudspeakers in the vehicle 1 to make alert tones includes: The vehicle 1 controls delays and play intensity of sounds made by the at least two loudspeakers.

An example of controlling the loudspeakers 241 to 243 is used. The vehicle 1 may control sounds made by the loudspeakers 241 to 243 to have different delays and control the sounds made by the loudspeakers 241 to 243 to be played at different intensity. For example, at a time point T₁, play intensity of the sound made by the loudspeaker 241 may be controlled to be 40 dB, and the loudspeaker 242 and the loudspeaker 243 may be controlled not to make sounds; at a time point T₁+ΔT, play intensity of the sound made by the loudspeaker 242 is controlled to be 20 dB, and the loudspeaker 241 and the loudspeaker 243 are controlled not to make sounds; and at a time point T₁+2ΔT, play intensity of the sound made by the loudspeaker 243 is controlled to be 20 dB, and the loudspeaker 241 and the loudspeaker 242 are controlled not to make sounds.

At a time point T₂, the play intensity of the sound made by the loudspeaker 241 may be controlled to be 20 dB, and the loudspeaker 242 and the loudspeaker 243 may be controlled not to make sounds; at a time point T₂+ΔT, the play intensity of the sound made by the loudspeaker 242 is controlled to be 40 dB, and the loudspeaker 241 and the loudspeaker 243 are controlled not to make sounds; and at a time point T₂+2ΔT, the play intensity of the sound made by the loudspeaker 243 is controlled to be 20 dB, and the loudspeaker 241 and the loudspeaker 242 are controlled not to make sounds.

For example, at a time point T₃, the play intensity of the sound made by the loudspeaker 241 may be controlled to be 20 dB, and the loudspeaker 242 and the loudspeaker 243 may be controlled not to make sounds; at a time point T₃+ΔT, the play intensity of the sound made by the loudspeaker 242 is controlled to be 20 dB, and the loudspeaker 241 and the loudspeaker 243 are controlled not to make sounds; and at a time point T₃+2ΔT, the play intensity of the sound made by the loudspeaker 243 is controlled to be 40 dB, and the loudspeaker 241 and the loudspeaker 242 are controlled not to make sounds. Therefore, the loudspeakers 241 to 243 may be controlled to make alert tones whose sound image shift directions are from east to west, or make alert tones whose sound image shift directions are from the loudspeaker 241 to the loudspeaker 243.

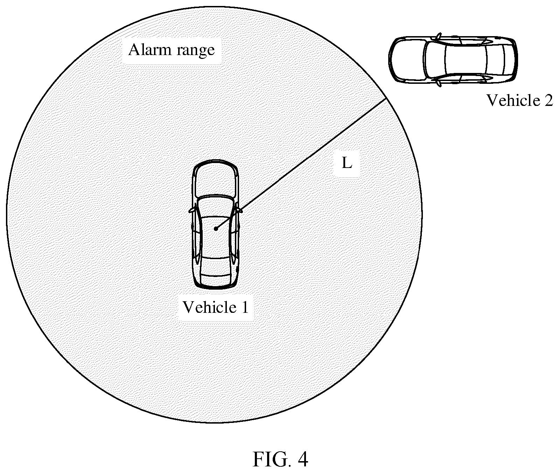

FIG. 4 is a diagram of an alarm range of the vehicle 1 according to an embodiment of this application. As shown in FIG. 4, the alarm range of the vehicle 1 may be determined based on a distance between the vehicle 1 and a target. For example, the alarm range may be a circular area in which a point on the vehicle 1 is used as a circle center, and a radius of the circular area may be a preset distance L (for example, 20 meters (meter, m)). When it is detected that a vehicle 2 enters the circular area, it may be determined that the vehicle 2 enters the alarm range of the vehicle 1.

In FIG. 4, whether the target enters the alarm range of the vehicle 1 is determined based on a distance between the vehicle 1 and the target. Determining of the alarm range in this embodiment of this application is not limited thereto. For example, whether the target enters the alarm range of the vehicle 1 may be further determined based on TTC between the target and the vehicle 1. For example, when it is detected that the TTC between the vehicle 1 and the target is less than or equal to preset duration (for example, 5 seconds (second, s)), it may be determined that the target enters the alarm range of the vehicle 1; or when it is detected that the TTC between the vehicle 1 and the target is greater than preset duration, it may be determined that the target does not enter the alarm range of the vehicle 1.

In an embodiment, the vehicle 1 may further determine the alarm range of the vehicle 1 based on data obtained from a cloud server.

In an embodiment, the vehicle 1 may determine a start loudspeaker in the at least two loudspeakers based on an orientation of the vehicle 2 relative to the vehicle 1.

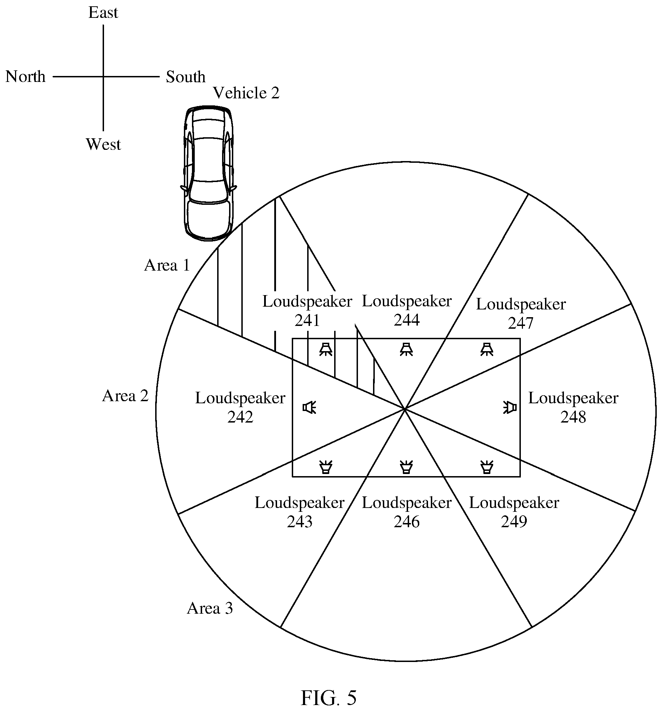

For example, FIG. 5 is a diagram of a correspondence between a loudspeaker and an orientation (or an area) of a target according to an embodiment of this application. It can be learned that a vehicle 2 first enters an area 1 within an alarm range. In this case, it may be determined, based on the correspondence, that a start loudspeaker is a loudspeaker 241.

The start loudspeaker may also be understood as a loudspeaker at a start of a sound image shift direction.

In an embodiment, the vehicle 1 may determine an end loudspeaker in the at least two loudspeakers based on a position of a prompted user.

The application scenario shown in FIG. 3 is used as an example. When the vehicle 2 enters the alarm range of the vehicle 1, it may be determined that the driver needs to be prompted. Therefore, the loudspeaker 243 closest to a position of the driver may be selected as the end loudspeaker. Therefore, when the motion trend of the vehicle 2 relative to the vehicle 1 is moving from east to west, the loudspeakers 241 to 243 are controlled to make alert tones whose sound image shift directions are from east to west.

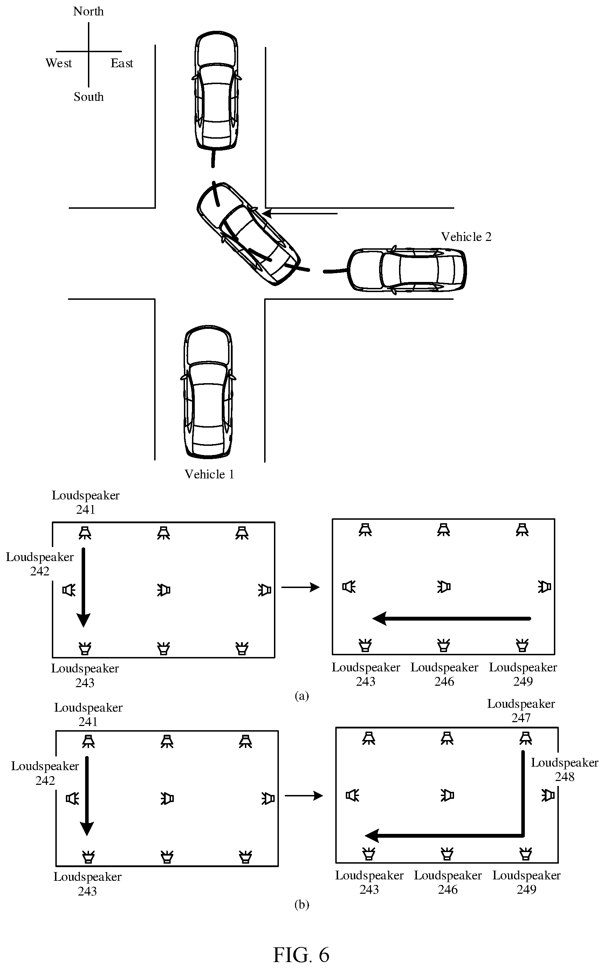

For another example, FIG. 6 is a diagram of another application scenario according to an embodiment of this application. As shown in (a) in FIG. 6, when a motion trend of a vehicle 2 relative to a vehicle 1 is adjusted from traveling from east to west to traveling from south to north, a loudspeaker 249, a loudspeaker 246, and a loudspeaker 243 may be controlled to make sound image shift alert tones. A sound image shift direction of the alert tone is from south to north, or a sound image shift direction of the alert tone is from the loudspeaker 249 to the loudspeaker 243.

For another example, as shown in (b) in FIG. 6, when the motion trend of the vehicle 2 relative to the vehicle 1 is adjusted from traveling from east to west to traveling from south to north, a loudspeaker 247, a loudspeaker 248, the loudspeaker 249, the loudspeaker 246, and the loudspeaker 243 may be controlled to make sound image shift alert tones. A sound image shift direction of the alert tone corresponds to the motion trend of the vehicle 2 relative to the vehicle 1 within an alarm range; or a sound image shift direction of the alert tone is from east to west first, and then from south to north.

A position of the end loudspeaker in the at least two loudspeakers is determined based on the position of the prompted user. This can improve a driver's capability of sensing a relative motion trend of a target and the vehicle 1, and help the driver quickly make a driving decision based on the relative motion trend of the target and the vehicle 1, to help improve driving safety of the user.

The end loudspeaker may also be understood as a loudspeaker at an end of the sound image shift direction.

The end loudspeaker may alternatively be irrelevant to the position of the prompted user. For example, when the motion trend of the vehicle 2 relative to the vehicle 1 is adjusted from traveling from east to west to traveling from south to north, the loudspeaker 248, the loudspeaker 245, and the loudspeaker 242 may be controlled to make sound image shift alert tones. A sound image shift direction of the alert tone is from south to north, or a sound image shift direction of the alert tone is from the loudspeaker 248 to the loudspeaker 242.

In an embodiment, the vehicle 1 may predict, based on data collected by a sensor, a motion trend of a target relative to the vehicle 1 in a future time period.

In an embodiment, the vehicle 1 may predict a motion trend of a target relative to the vehicle 1 in a future time period based on a status of the target in a case in which the target enters the alarm range of the vehicle 1.

For example, the status of the target in a case in which the target enters the alarm range of the vehicle 1 includes but is not limited to one or more of a speed, an acceleration, a speed direction, a yaw angle direction, or a yaw angular velocity in a case in which the target enters the alarm range of the vehicle 1.

The application scenario shown in FIG. 3 is used as an example. When the predicted motion trend of the vehicle 2 relative to the vehicle 1 is from east to west, the vehicle 1 may determine, based on the predicted motion trend, that the vehicle 2 successively passes an area 1, an area 2, and an area 3 within the alarm range in a future time period. Because there is a correspondence between the area 1 and the loudspeaker 241, there is a correspondence between the area 2 and the loudspeaker 242, and there is a correspondence between the area 3 and the loudspeaker 243, the vehicle 1 may control the loudspeakers 241 to 243 to make alert tones, and a sound image shift direction of the alert tone corresponds to the motion trend. In this way, when the vehicle 2 enters the area 1 and does not enter the area 2, the vehicle 1 may control the loudspeakers 241 to 243 to make sound image shift alert tones. The loudspeakers 241 to 243 make the sound image shift alert tones, so that a user learns in advance of a motion trend of the vehicle 2 relative to the vehicle 1. This helps the user make a driving decision in advance based on the motion trend, to help improve driving safety of the user.

In an embodiment, when the predicted motion trend of the vehicle 2 relative to the vehicle 1 is different from an actual motion trend of the vehicle 2 relative to the vehicle 1, at least two loudspeakers in the plurality of loudspeakers are controlled to make alert tones whose sound image shift directions correspond to the actual motion trend.

For example, when the vehicle 2 enters the alarm range of the vehicle 1, the vehicle 1 may control, based on the predicted motion trend of the vehicle 2 relative to the vehicle 1, the at least two loudspeakers to make alert tones in a first sound image shift direction. The first sound image shift direction corresponds to the predicted motion trend of the vehicle 2 relative to the vehicle 1. When the predicted motion trend of the vehicle 2 relative to the vehicle 1 is inconsistent with the actual motion trend of the vehicle 2 relative to the vehicle 1, the vehicle 1 may switch to control the at least two loudspeakers to make alert tones in a second sound image shift direction. The second sound image shift direction corresponds to the actual motion trend.

In an embodiment, when the vehicle 2 is located in the area 1 and does not enter the area 2, the vehicle 1 may control the loudspeaker 241 to make an alert tone. The alert tone made by the loudspeaker 241 indicates that a target has entered the alarm range of the vehicle 1 and the target is located in a position corresponding to the loudspeaker 241 (or the area 1 corresponding to the loudspeaker 241). When the vehicle 2 travels into the area 2 from the area 1, the vehicle 1 may control the loudspeakers 241 and 242 to make alert tones. A sound image shift direction of the alert tone corresponds to a motion trend of the vehicle 2 relative to the vehicle 1. For example, the sound image shift direction of the alert tone is from east to west, or the sound image shift direction of the alert tone is from the loudspeaker 241 to the loudspeaker 242. When the vehicle 2 travels into the area 3 from the area 2, the vehicle 1 may control the loudspeakers 241 to 243 to make alert tones. A sound image shift direction of the alert tone corresponds to a motion trend of the vehicle 2 relative to the vehicle 1. For example, the sound image shift direction of the alert tone is from east to west, or the sound image shift direction of the alert tone is from the loudspeaker 241 to the loudspeaker 243.

In an embodiment, the vehicle 1 may determine, based on data collected by a sensor outside a cockpit, a motion trend of the vehicle 2 relative to the vehicle 1, to control, based on the motion trend, the at least two sound-making apparatuses to make alert tones. A sound image shift direction of the alert tone corresponds to the motion trend.

For example, as shown in FIG. 5, when the vehicle 2 is located in the area 1 and does not enter the area 2, the vehicle 1 may determine a motion trend of the vehicle 2 relative to the vehicle 1 based on a sensor (for example, one or more of a camera, a lidar, and a millimeter-wave radar) outside a cockpit of the vehicle 1, to control the at least two sound-making apparatuses to make sound image shift alert tones. For example, if a motion trend of the vehicle 2 in the area 1 relative to the vehicle 1 is traveling from east to west, the vehicle 1 may control the loudspeakers 241 to 243 to make alert tones, and a sound image shift direction of the alert tone is from east to west.

In an embodiment, the vehicle 1 may alternatively determine the motion trend of the vehicle 2 relative to the vehicle 1 based on data sent by a cloud server.

In an embodiment, the vehicle 1 may control a sound image shift speed of the alert tone.

In an embodiment, that the vehicle 1 may control a sound image shift speed of the alert tone includes: The vehicle 1 controls the sound image shift speed of the alert tone based on information between the vehicle 1 and a target. For example, the information between the vehicle 1 and the target includes but is not limited to one or more of a motion trend of the target relative to the vehicle 1, an alarm level, a distance between the vehicle 1 and the target, and TTC between the vehicle 1 and the target.

For example, the motion trend of the target relative to the vehicle 1 includes an acceleration of the target relative to the vehicle 1. The application scenario shown in FIG. 3 is used as an example. After the vehicle 2 enters the alarm range of the vehicle 1, if an acceleration of the vehicle 2 relative to the vehicle 1 is increasing, sound image shift speeds of alert tones made by the loudspeakers 241 to 243 may be controlled to be increasing. Table 1 shows a correspondence between an acceleration of the target relative to the vehicle 1 and a sound image shift speed.

**Table 1**

| Acceleration of a target relative to a vehicle 1 | Sound image shift speed |
|---|---|
| (0 m/s², 2 m/s²) | Low |
| [2 m/s², 5 m/s²) | Medium |
| [5 m/s², 10 m/s²) | High |
| ... | ... |

For example, when an acceleration of the vehicle 2 relative to the vehicle 1 is 1 meter per second (m/s²), the vehicle 1 may use a low sound image shift speed. For example, at a time point T₁, play intensity of a sound made by the loudspeaker 241 may be controlled to be 40 dB, play intensity of a sound made by the loudspeaker 242 may be controlled to be 20 dB, and play intensity of a sound made by the loudspeaker 243 may be controlled to be 20 dB. At a time point T₂ after the time point T₁, the play intensity of the sound made by the loudspeaker 241 may be controlled to be 20 dB, the play intensity of the sound made by the loudspeaker 242 may be controlled to be 40 dB, and the play intensity of the sound made by the loudspeaker 243 may be controlled to be 20 dB. At a time point T₃ after the time point T₂, the play intensity of the sound made by the loudspeaker 241 may be controlled to be 20 dB, the play intensity of the sound made by the loudspeaker 242 may be controlled to be 20 dB, and the play intensity of the sound made by the loudspeaker 243 may be controlled to be 40 dB. A time interval between the time point T₁ and the time point T₂ and a time interval between the time point T₂ and the time point T₃ may be 10 ms.

When the acceleration of the vehicle 2 relative to the vehicle 1 is increased from 1 m/s² to 4 m/s², the vehicle 1 may use a medium sound image shift speed. For example, at a time point T₁, the play intensity of the sound made by the loudspeaker 241 may be controlled to be 40 dB, the play intensity of the sound made by the loudspeaker 242 may be controlled to be 20 dB, and the play intensity of the sound made by the loudspeaker 243 may be controlled to be 20 dB. At a time point T₄ after the time point T₁, the play intensity of the sound made by the loudspeaker 241 may be controlled to be 20 dB, the play intensity of the sound made by the loudspeaker 242 may be controlled to be 40 dB, and the play intensity of the sound made by the loudspeaker 243 may be controlled to be 20 dB. At a time point T₅ after the time point T₄, the play intensity of the sound made by the loudspeaker 241 may be controlled to be 20 dB, the play intensity of the sound made by the loudspeaker 242 may be controlled to be 20 dB, and the play intensity of the sound made by the loudspeaker 243 may be controlled to be 40 dB. A time interval between the time point T₁ and the time point T₄ and a time interval between the time point T₄ and the time point T₅ may be 6 ms.

When a moving speed of the vehicle 2 relative to the vehicle 1 is increased from 4 m/s² to 8 m/s², the vehicle 1 may use a high sound image shift speed. For example, at a time point T₁, play intensity of a sound made by the loudspeaker 241 may be controlled to be 40 dB, play intensity of a sound made by the loudspeaker 242 may be controlled to be 20 dB, and play intensity of a sound made by the loudspeaker 243 may be controlled to be 20 dB. At a time point T₆ after the time point T₁, the play intensity of the sound made by the loudspeaker 241 may be controlled to be 20 dB, the play intensity of the sound made by the loudspeaker 242 may be controlled to be 40 dB, and the play intensity of the sound made by the loudspeaker 243 may be controlled to be 20 dB. At a time point T₇ after the time point T₆, the play intensity of the sound made by the loudspeaker 241 may be controlled to be 20 dB, the play intensity of the sound made by the loudspeaker 242 may be controlled to be 20 dB, and the play intensity of the sound made by the loudspeaker 243 may be controlled to be 40 dB. A time interval between the time point T₁ and the time point T₆ and a time interval between the time point T₆ and the time point T₇ may be 2 ms.

The correspondence between the acceleration of the target relative to the vehicle 1 and the sound image shift speed shown in Table 1 is merely an example, and this embodiment of this application is not limited thereto. For example, when the acceleration of the target relative to the vehicle 1 is less than 5 m/s², a low sound image shift speed is used; or when the moving speed of the target relative to the vehicle 1 is greater than or equal to 5 m/s², a high sound image shift speed is used.

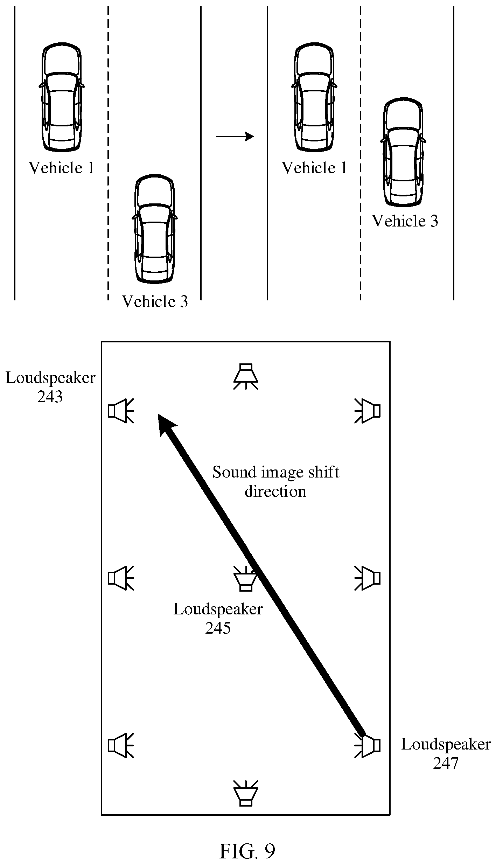

In an embodiment, a motion trend of the target relative to the vehicle 1 includes a motion direction of the target relative to the vehicle 1. For example, the target may be classified into a front side-crossing target and a blind spot warning target based on the motion direction of the target relative to the vehicle 1. For example, the vehicle 2 shown in FIG. 3 is a front side-crossing target, and a vehicle 3 shown in FIG. 9 may be a blind spot warning target. When it is determined that the target is a front side-crossing target, the vehicle 1 may use a high sound image shift speed; or when it is determined that the target is a blind spot warning target, the vehicle 1 may use a low sound image shift speed.

For another example, the vehicle 1 may further control the sound image shift speed of the alert tone based on an alarm level. For example, the alarm level may be output by an advanced driver-assistance system (advanced driver-assistance system, ADAS) in the vehicle 1 based on data collected by a sensor outside the cockpit. A higher alarm level indicates a more dangerous target. For example, Table 2 shows a correspondence between an alarm level and a sound image shift speed.

**Table 2**

| Alarm level | Sound image shift speed |
|---|---|
| Alarm level 1 | Low |
| Alarm level 2 | Medium |
| Alarm level 3 | High |
| ... | ... |

For example, when an alarm level of the target is an alarm level 1, a low sound image shift speed may be used.

For example, when an alarm level of the target is an alarm level 2, a medium sound image shift speed may be used.

For example, when an alarm level of the target is an alarm level 3, a high sound image shift speed may be used.

For the foregoing process in which the vehicle 1 controls the loudspeaker to work based on different sound image shift speeds, refer to the description in the foregoing embodiment. Details are not described herein again.

The correspondence between the alarm range and the sound image shift speed in Table 2 is merely an example. This is not specifically limited in this embodiment of this application. For example, the alarm level may be further classified into more or less alarm levels than the three alarm levels.

The foregoing is described by using an example in which the alarm level is output by the ADAS based on the data collected by the sensor outside the cockpit. This embodiment of this application is not limited thereto. For example, the vehicle 1 may further determine an alarm level of the target based on data sent by a cloud server. For example, the alarm level may be determined by the cloud server, so that the cloud server may send the alarm level of the target to the vehicle 1.

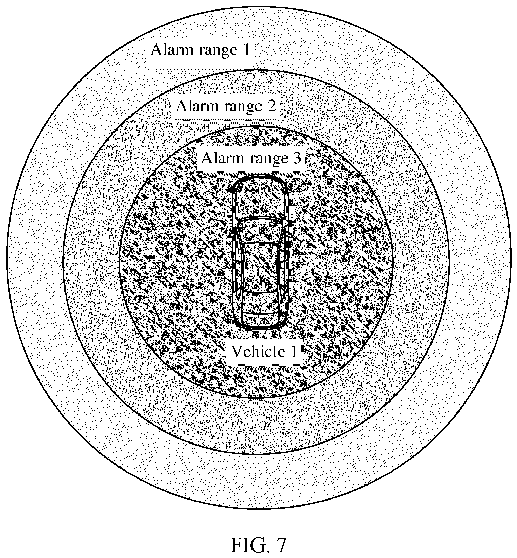

For another example, the vehicle 1 may further control a sound image shift speed of an alert tone based on a distance between the target and the vehicle 1. For example, compared with the alarm range shown in FIG. 4, FIG. 7 is a diagram of an alarm range division manner according to an embodiment of this application. Table 3 shows a correspondence between a distance between the target and the vehicle 1 and a sound image shift speed according to this embodiment of this application.

**Table 3**

| Distance between a target and a vehicle 1 | Sound image shift speed |
|---|---|
| (20 m, 12 m) | Low |
| [12 m, 4 m) | Medium |
| [4 m, 0 m) | High |
| ... | ... |

For example, when a distance between the target and the vehicle 1 is 15 m, a low sound image shift speed may be used.

For example, when a distance between the target and the vehicle 1 is 10 m, a medium sound image shift speed may be used.

For example, when a distance between the target and the vehicle 1 is 4 m, a high sound image shift speed may be used.

For the foregoing process in which the vehicle 1 controls the loudspeaker to work based on different sound image shift speeds, refer to the description in the foregoing embodiment. Details are not described herein again.

The correspondence between the distance between the target and the vehicle 1 and the sound image shift speed in Table 3 is merely an example. This is not specifically limited in this embodiment of this application. For example, when the distance between the target and the vehicle 1 is greater than 5 m, a low sound image shift speed may be used; or when the distance between the target and the vehicle 1 is less than or equal to 5 m, a high sound image shift speed may be used.

The distance between the target and the vehicle 1 may be determined by the vehicle 1 based on data collected by a sensor outside the cockpit of the vehicle 1, or may be determined by the vehicle 1 based on data sent by the cloud server.

For another example, the vehicle 1 may further control the sound image shift speed of the alert tone based on TTC between the target and the vehicle 1. Table 4 shows a correspondence between TTC between the target and the vehicle 1 and a sound image shift speed according to an embodiment of this application.

**Table 4**

| TTC | Sound image shift speed |
|---|---|
| (5s, 4s) | Low |
| [4s, 3s) | Medium |
| [3s, 2s) | High |
| ... | ... |

For example, when TTC is 5s, a low sound image shift speed may be used.

For example, when TTC is 4s, a medium sound image shift speed may be used.

For example, when TTC is 3s, a high sound image shift speed may be used.

For the foregoing process in which the vehicle 1 controls the loudspeaker to work based on different sound image shift speeds, refer to the description in the foregoing embodiment. Details are not described herein again.

The correspondence between the TTC and the sound image shift speed in Table 4 is merely an example. This is not specifically limited in this embodiment of this application.

The TTC may be determined by the vehicle 1 based on data collected by a sensor outside the cockpit of the vehicle 1, or may be determined by the vehicle 1 based on data sent by the cloud server. For another example, the sound image shift speed of the alert tone may be further controlled with reference to a plurality of the following: a motion trend of the target relative to the vehicle 1, an alarm level, a distance between the vehicle 1 and the target, and TTC between the vehicle 1 and the target. For example, the sound image shift speed of the alert tone may be controlled with reference to the alarm level and the TTC between the vehicle 1 and the target. Table 5 shows a correspondence between a sound image shift speed and each of an alarm level and TTC according to this embodiment of this application.

**Table 5**

| Alarm level | TTC | Sound image shift speed |
|---|---|---|
| Alarm level 1 | (5s, 4s) | Low |
| | [4s, 3s) | Low |
| | [3s, 2s) | High |
| Alarm level 2 | (5s, 4s) | Low |
| | [4s, 3s) | Medium |
| | [3s, 2s) | High |
| Alarm level 3 | (5s, 4s) | Medium |
| | [4s, 3s) | Medium |
| | [3s, 2s) | High |
| ... | ... | ... |

The correspondence between the sound image shift speed and each of the alarm level and the TTC in Table 5 is merely an example. This is not specifically limited in this embodiment of this application.

In an embodiment, the sound image shift speed of the alert tone may be further controlled based on a target type. For example, Table 6 shows a correspondence between a target type and a sound image shift speed.

**Table 6**

| Target type | Sound image shift speed |
|---|---|
| Two-box sedan, three-box sedan, or sports utility vehicle (sports utility vehicle, SUV) | Low |
| Bicycle or motorcycle | Medium |
| Pedestrian, truck, bus, or truck | High |
| ... | ... |

The correspondence between the target type and the sound image shift speed in Table 6 is merely an example. This is not specifically limited in this embodiment of this application.

In an embodiment, the at least two loudspeakers may be further located at a head pillow of a seat.

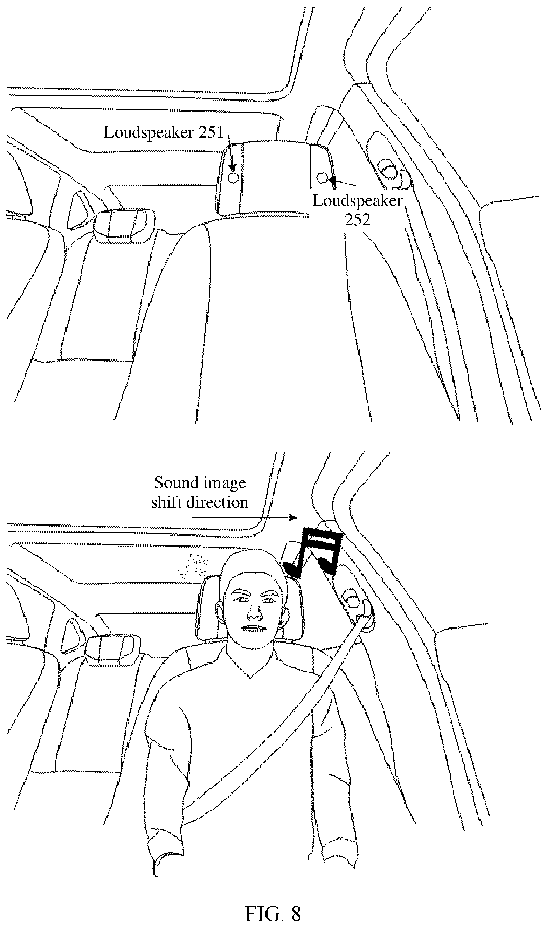

FIG. 8 is a diagram of making, by at least two loudspeakers, alert tones whose sound images can shift according to an embodiment of this application. As shown in FIG. 8, a head pillow of a driver seat includes a loudspeaker 251 and a loudspeaker 252. The application scenario shown in FIG. 3 is used as an example. When the vehicle 2 enters the alarm range of the vehicle 1 and the motion trend of the vehicle 2 relative to the vehicle 1 is from east to west, the loudspeaker 251 and the loudspeaker 252 may be controlled to make sound image shift alert tones. A sound image shift direction of the alert tone is from the loudspeaker 251 to the loudspeaker 252.

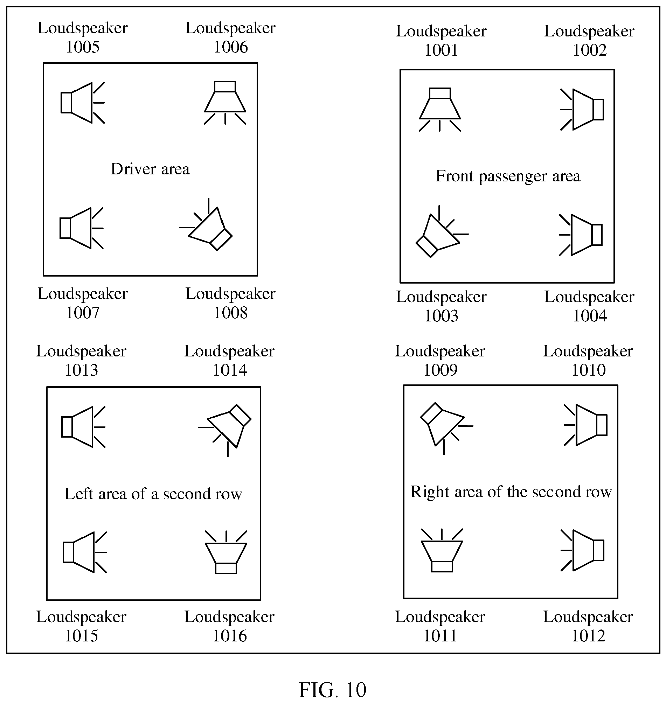

With reference to FIG. 3 to FIG. 8, the foregoing describes a process in which the vehicle 1 controls the at least two loudspeakers to make sound image shift alert tones in a front cross traffic alert scenario. The following describes other application scenarios provided in embodiments of this application with reference to FIG. 9 and FIG. 10. For example, embodiments of this application may be further applied to a driving blind spot detection (blind spot detection) and warning scenario. The driving blind spot detection and warning scenario includes but is not limited to blind spot detection and warning, lane change auxiliary warning, rear cross traffic alert (rear cross traffic alert), rear cross traffic assist with braking (rear cross traffic assist with braking), and door opening warning (door open warning, DOW).

FIG. 9 is a diagram of another application scenario according to an embodiment of this application. This scenario is a rear cross traffic alert scenario. As shown in FIG. 9, in a traveling process of the vehicle 1, it is detected, based on data collected by a sensor outside a cockpit, that a vehicle 3 accelerates to surpass the vehicle 1 from the right rear of the vehicle 1. When the vehicle 3 enters an alarm range of the vehicle 1 and a motion trend of the vehicle 3 relative to the vehicle 1 is running from southeast to northwest, the vehicle 1 may control a loudspeaker 247, a loudspeaker 245, and a loudspeaker 243 to make sound image shift alert tones. A sound image shift direction of the alert tone corresponds to the motion trend of the vehicle 3 relative to the vehicle 1. Therefore, a driver may be informed that a target is surpassing the vehicle 1 from the right rear of the vehicle 1.

In an embodiment, the at least two loudspeakers may be determined from a plurality of loudspeakers in the vehicle 1 based on an area in which a user is located.

For example, in a door opening warning scenario, the at least two loudspeakers may be determined from the plurality of loudspeakers in the vehicle 1 based on an area in which a user who opens a vehicle door is located, to control the at least two loudspeakers to make sound image shift alert tones. A sound image shift direction of the alert tone is a motion trend of a target outside the vehicle door relative to the vehicle 1.

For example, FIG. 10 is a diagram of loudspeaker distribution according to an embodiment of this application. As shown in FIG. 10, a vehicle 1 may include loudspeakers 1001 to 1016. A cockpit of the vehicle 1 may be divided into a driver area, a front passenger area, a left area of a second row, and a right area of the second row. The loudspeakers 1001 to 1004 are loudspeakers in the front passenger area, the loudspeakers 1005 to 1008 are loudspeakers in the driver area, the loudspeakers 1009 to 1012 are loudspeakers in the right area of the second row, and the loudspeakers 1013 to 1016 are loudspeakers in the left area of the second row.

For example, when a user in the driver area gets off the vehicle, the user may not notice a target (for example, a user who rides a bicycle or a motorcycle) moving outside a vehicle door of the driver area. The user who is ready to get off the vehicle may be prompted by using a sound image shift alert tone, so that the user learns that there is a collision risk after the vehicle door is opened. For example, when the target outside the vehicle door of the driver area travels from the rear of the vehicle door to the front, the loudspeaker 1005 and the loudspeaker 1007 may be controlled to make sound image shift alert tones. A sound image shift direction of the alert tone is from a tail of the vehicle 1 to a head of the vehicle 1; or a sound image shift direction of the alert tone is from the loudspeaker 1007 to the loudspeaker 1005.

In an embodiment, that the at least two loudspeakers may be determined from the plurality of loudspeakers in the vehicle 1 based on an area in which a user who opens a vehicle door is located, to control the at least two loudspeakers to make sound image shift alert tones includes: determining the at least two loudspeakers from the plurality of loudspeakers in the vehicle 1 based on the area in which the user who opens the vehicle door is located and a motion trend of the target.

For example, when an operation that a user in the front passenger area is ready to open a vehicle door is detected by using a camera in the cockpit, a target within an alarm range of the vehicle 1 may be detected. When it is detected that the target approaches the vehicle door of the front passenger area from the right rear outside the vehicle door of the front passenger area to the left front, the loudspeaker 1001 and the loudspeaker 1004 may be determined from the loudspeakers 1001 to 1004 based on a motion trend of the target relative to the vehicle 1. Therefore, the loudspeaker 1001 and the loudspeaker 1004 are controlled to make alert tones, and a sound image shift direction of the alert tone is from the loudspeaker 1001 to the loudspeaker 1004. In this way, the user in the front passenger area may determine, based on the alert tone, that there is a collision risk after the vehicle door is opened. Alternatively, the sound image shift direction of the alert tone may be from the loudspeaker 1004 to the loudspeaker 1001. Therefore, the user in the front passenger area may determine, based on the alert tone, that the target outside the vehicle door is approaching.

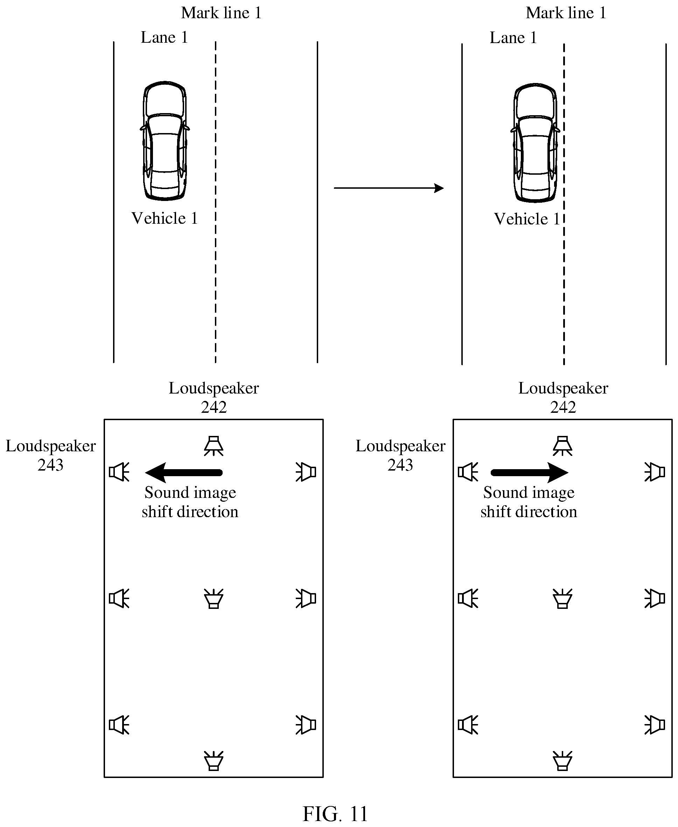

FIG. 11 is a diagram of another application scenario according to an embodiment of this application. As shown in FIG. 11, the scenario is a lane departure warning (lane departure warning) scenario.

A vehicle 1 may determine, based on data collected by a sensor outside a cockpit, information about a mark line of a lane on which the vehicle 1 is located. When the vehicle 1 departs from the middle of a lane 1 toward a mark line 1, a loudspeaker 242 and a loudspeaker 243 may be controlled to make sound image shift alert tones. For example, a sound image shift direction of the alert tone may be from the loudspeaker 243 to the loudspeaker 242, and the alert tone indicates a user that the vehicle is approaching a right mark line; or a sound image shift direction of the alert tone may be from the loudspeaker 242 to the loudspeaker 243, and the alert tone indicates the user to turn a steering wheel leftward, so that the vehicle is in the middle of the lane 1.

With reference to the accompanying drawings, the foregoing describes a process in which the at least two loudspeakers in the cockpit make the sound image shift alert tones, so that the user in the cockpit learns of a motion trend of a target relative to the vehicle 1. This embodiment of this application is not limited thereto. For example, the technical solution in this embodiment of this application may be further applied to the outside of the cockpit, and at least two loudspeakers outside the cockpit make sound image shift alert tones, to prompt a user outside the cockpit.

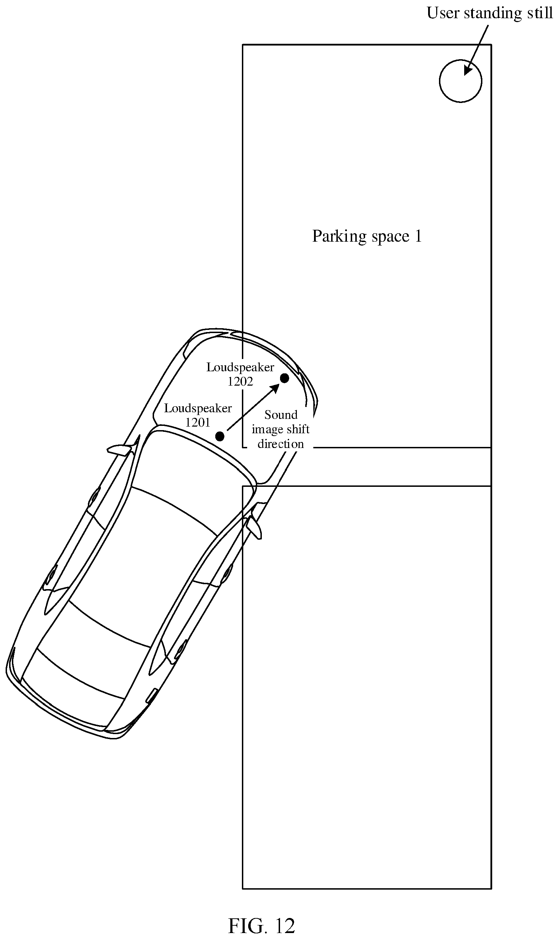

FIG. 12 is a diagram of another application scenario according to an embodiment of this application. As shown in FIG. 12, a user drives a vehicle 1 to park toward a parking space 1. When a user standing still near the parking space 1 is detected based on data collected by a sensor outside a cockpit, a loudspeaker 1201 and a loudspeaker 1202 outside the cockpit may be controlled to make sound image shift alert tones. A sound image shift direction of the alert tone may be from the loudspeaker 1201 to the loudspeaker 1202. In this way, the user standing still can learn that the vehicle 1 is approaching the user, and can avoid the vehicle 1 in time.

In an embodiment, the vehicle 1 stores a mapping relationship between a motion trend and a sound-making apparatus, and the vehicle 1 may determine at least two loudspeakers based on the mapping relationship and a motion trend of a target relative to the vehicle 1. For example, targets within an alarm range of the vehicle 1 may be classified into a front side-crossing target and a blind spot target. A motion trend of the front side-crossing target relative to the vehicle 1 may include moving from the left to the right of a vehicle head or moving from the right to the left of the vehicle head. A motion trend of the blind spot target relative to the vehicle 1 may include accelerating from the left rear of the vehicle 1 to exceed the vehicle 1 or accelerating from the right rear of the vehicle 1 to exceed the vehicle 1. Table 7 shows a relationship among a motion trend, a sound-making apparatus, and a sound image shift direction.

**Table 7**

| Motion trend | Sound-making apparatus | Sound image shift direction |
|---|---|---|
| Moving from the left to the right of a vehicle head | Loudspeaker 241, loudspeaker 242, and loudspeaker 243 | From the loudspeaker 243 to the loudspeaker 241 |
| Moving from the right to the left of a vehicle head | Loudspeaker 241, loudspeaker 242, and loudspeaker 243 | From the loudspeaker 241 to the loudspeaker 243 |
| Accelerating from the left rear of a vehicle 1 to exceed the vehicle 1 | Loudspeaker 241, loudspeaker 245, and loudspeaker 249 | From the loudspeaker 249 to the loudspeaker 241 |
| Accelerating from the right rear of a vehicle 1 to exceed the vehicle 1 | Loudspeaker 243, loudspeaker 245, and loudspeaker 247 | From the loudspeaker 247 to the loudspeaker 243 |
| ... | ... | ... |

For example, the blind spot target may further include a blind spot target in a door opening warning scenario. For example, a motion trend of the blind spot target relative to the vehicle 1 is moving from the rear of a vehicle door in a driver area to the front, moving from the rear of a vehicle door in a front passenger area to the front, moving from the rear of a vehicle door in a left area of a second row to the front, or moving from the rear of a vehicle door on the right of a second row to the front. Table 8 shows a relationship among a motion trend, a sound-making apparatus, and a sound image shift direction.

**Table 8**

| Motion trend | Sound-making apparatus | Sound image shift direction |
|---|---|---|
| Moving from the rear of a vehicle door in a driver area to the front | Loudspeaker 1005 and loudspeaker 1007 | From the loudspeaker 1007 to the loudspeaker 1005 |
| Moving from the rear of a vehicle door in a front passenger area to the front | Loudspeaker 1002 and loudspeaker 1004 | From the loudspeaker 1004 to the loudspeaker 1002 |
| Moving from the rear of a vehicle door in a left area of a second row to the front | Loudspeaker 1013 and loudspeaker 1015 | From the loudspeaker 1015 to the loudspeaker 1013 |
| Moving from the rear of a vehicle door on the right of a second row to the front | Loudspeaker 1010 and loudspeaker 1012 | From the loudspeaker 1012 to the loudspeaker 1010 |
| ... | ... | ... |

Table 7 and Table 8 are merely examples, and this embodiment of this application is not limited thereto.

In an embodiment, when the at least two loudspeakers are controlled to make sound image shift alert tones, one or more of the following prompt manners may be further combined: prompting based on a lighting direction of an atmosphere light, prompting based on a vibration direction of a steering wheel, and prompting by using a vehicle-mounted display or a head-up display (head-up display, HUD) apparatus.

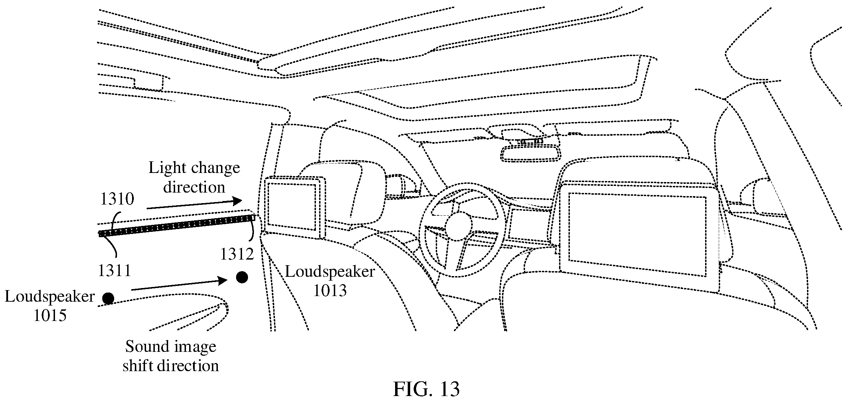

FIG. 13 is a diagram of prompting a user by using a sound image shift alert tone and an atmosphere light according to an embodiment of this application. As shown in FIG. 13, for example, a carrier is a vehicle. The atmosphere light includes a light strip 1310 disposed at a handrail of a vehicle door. The light strip 1310 includes a plurality of light beads. For example, a user in a left area of a second row gets off the vehicle. When it is detected that a target is within an alarm range of the vehicle and the target moves from the rear of a vehicle door on the left of a second row to the front, a loudspeaker 1013 and a loudspeaker 1015 may be controlled to make sound image shift alert tones, and a light gradient direction in the light strip 1310 is controlled to change from a light bead 1311 to a light bead 1312. Optionally, a sound image shift speed of the alert tone and/or a light gradient speed may be further controlled based on a distance or TTC between the target and the vehicle door on the left of the second row.

In an embodiment, when it is detected that a target is within an alarm range of the vehicle and the target moves from the rear of a vehicle door on the left of a second row to the front, a light gradient direction in the light strip 1310 may be controlled to change from the light bead 1311 to the light bead 1312.

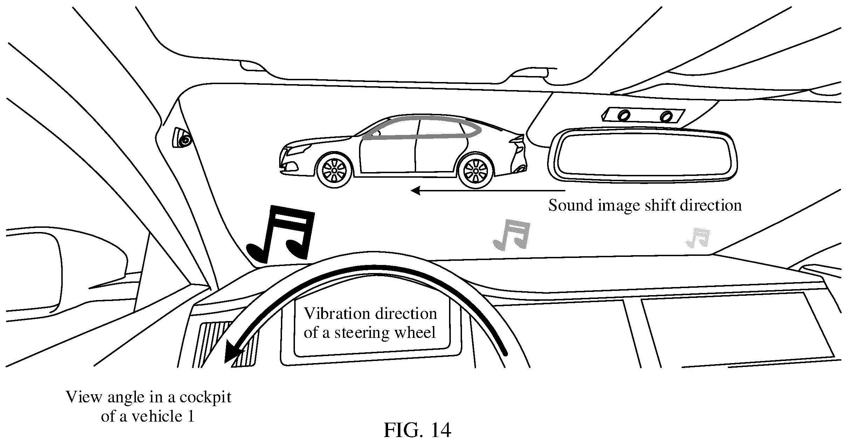

FIG. 14 is a diagram of prompting a user by using a sound image shift alert tone and steering wheel vibration according to an embodiment of this application. As shown in FIG. 14, when it is detected that a vehicle 2 enters an alarm area of a vehicle 1 and the vehicle 2 moves from the right of a head of the vehicle 1 to the left, loudspeakers 241 to 243 may be controlled to make alert tones whose sound image shift directions are from the loudspeaker 241 to the loudspeaker 243, and a steering wheel is controlled to vibrate counterclockwise.

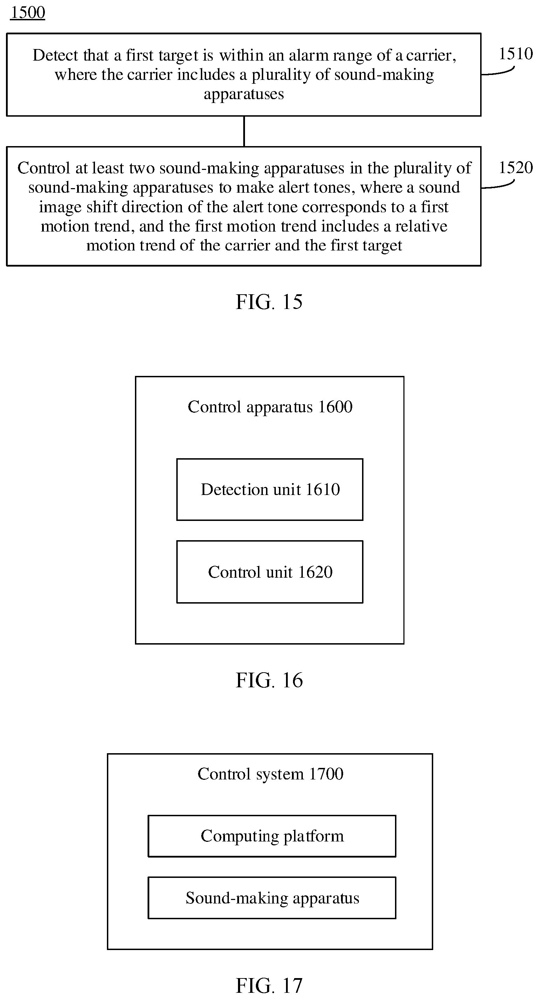

FIG. 15 is a schematic flowchart of a control method 1500 according to an embodiment of this application. The method 1500 may be performed by a carrier (for example, a vehicle), or the method 1500 may be performed by the foregoing computing platform, or the method 1500 may be performed by a system including a computing platform and at least two sound-making apparatuses, or the method 1500 may be performed by a system-on-a-chip (system-on-a-chip, SoC) on the foregoing computing platform, or the method 1500 may be performed by a processor on the computing platform. The method 1500 includes the following steps.

S1510: Detect that a first target is within an alarm range of a carrier, where the carrier includes a plurality of sound-making apparatuses.

For example, the first target may be the vehicle 2 or the vehicle 3 in the foregoing embodiment.

For example, the carrier may be the vehicle 1 in the foregoing embodiment.

Optionally, the detecting that a first target is within an alarm range of a carrier includes: when a distance between the carrier and the first target is less than or equal to a preset distance, and/or TTC between the carrier and the first target is less than or equal to preset duration, detecting that the first target is within the alarm range of the carrier.

For example, the preset distance may be 20 meters.

For example, the preset duration may be 5 seconds.

S1520: Control at least two sound-making apparatuses in a plurality of sound-making apparatuses to make alert tones, where a sound image shift direction of the alert tone corresponds to a first motion trend, and the first motion trend includes a relative motion trend of the carrier and the first target.

The relative motion trend of the carrier and the first target may include a relative motion trend of the carrier relative to the first target, or a relative motion trend of the first target relative to the carrier. Optionally, the controlling at least two sound-making apparatuses in a plurality of sound-making apparatuses to make alert tones includes: when a speed of the carrier is greater than or equal to a preset speed threshold, controlling the at least two sound-making apparatuses in the plurality of sound-making apparatuses to make the alert tones.

Optionally, the method 1500 further includes: controlling a sound image shift speed of the alert tone.

Optionally, the controlling a sound image shift speed of the alert tone includes: controlling the sound image shift speed of the alert tone based on information between the carrier and the first target.

Optionally, the information between the carrier and the first target includes at least one of the first motion trend, an alarm level, the distance between the carrier and the first target, and the time to collision TTC between the carrier and the first target.

Optionally, the method 1500 further includes: determining, based on a position of a prompted user, a sound-making apparatus located at an end of the sound image shift direction in the at least two sound-making apparatuses.

For example, as shown in FIG. 6, when it is detected that the vehicle 2 enters the alarm range of the vehicle 1 and the vehicle 2 is a front side-crossing target, the vehicle 1 may determine to prompt a driver, so that a loudspeaker 241 closest to the driver may be selected as a loudspeaker at the end of the sound image shift direction.

For example, as shown in FIG. 10, when a user in the front passenger area is ready to get off the vehicle, it is detected that a target outside a vehicle door in the front passenger area moves from the rear to the front, and the user may collide with the target when the vehicle door is opened. In this case, the vehicle 1 may determine to prompt the user in the front passenger area. A loudspeaker may be selected from the loudspeakers 1001 to 1004 as a sound-making apparatus at the end.

Optionally, the method 1500 further includes: determining, based on an orientation of the first target relative to the carrier in a case in which the first target enters the alarm range, a sound-making apparatus located at a start of the sound image shift direction in the at least two sound-making apparatuses.

For example, as shown in FIG. 5, the vehicle 2 first enters the area 1 within the alarm range. In this case, it may be determined, based on a correspondence between a loudspeaker and a target orientation, that a start loudspeaker is the loudspeaker 241.

Optionally, the method 1500 further includes: predicting the first motion trend based on a status of the first target; and the controlling at least two sound-making apparatuses in the plurality of sound-making apparatuses to make alert tones includes: controlling, based on the predicted first motion trend, the at least two sound-making apparatuses in the plurality of sound-making apparatuses to make the alert tones.

Optionally, the status of the first target includes one or more of a speed, an acceleration, a speed direction, a yaw angle direction, or a yaw angular velocity of the first target.

Optionally, the predicting the first motion trend based on a status of the first target includes: inputting the status of the first target into a trajectory prediction model, to obtain the first motion trend through prediction.

For example, the status of the first target includes a status of the first target entering the alarm range of the carrier.

For example, the status of the first target may further include a historical track of the first target before the first target enters the alarm range of the carrier.

Optionally, the method 1500 further includes: when the predicted first motion trend is different from an actual relative motion trend of the first target and the carrier, controlling at least two sound-making apparatuses in the plurality of sound-making apparatuses to make alert tones whose sound image shift directions correspond to the actual relative motion trend.

For example, the application scenario shown in FIG. 3 is used as an example. When the vehicle 2 enters the alarm range of the vehicle 1, the vehicle 1 may control, based on a predicted motion trend (for example, from east to west) of the vehicle 2 relative to the vehicle 1, the loudspeakers 241 to 243 to make alert tones whose sound image shift directions are from east to west. When the predicted motion trend of the vehicle 2 relative to the vehicle 1 is inconsistent with an actual motion trend (for example, from south to north) of the vehicle 2 relative to the vehicle 1, the vehicle 1 may switch to control the loudspeaker 243, the loudspeaker 246, and the loudspeaker 249 to make alert tones whose sound image shift directions are from south to north.

Optionally, the method 1500 further includes: determining the first motion trend based on first data collected by a sensor of the carrier; or obtaining second data sent by a cloud server, and determining the first motion trend based on the second data.

For example, as shown in FIG. 5, when it is detected that the vehicle 2 enters the alarm range of the vehicle 1, the vehicle 1 may determine a motion trend of the vehicle 2 relative to the vehicle 1 based on sensor data collected by a sensor outside a cockpit. For example, the vehicle 2 enters the alarm range of the vehicle 1 at a first time point. The vehicle 1 may determine a motion trend of the vehicle 2 relative to the vehicle 1 within 1s based on sensor data that is collected by the sensor and that is within 1s from the first time point. Therefore, the at least two loudspeakers in the plurality of sound-making loudspeakers are controlled, based on the motion trend, to make alert tones corresponding to the motion trend.

Optionally, the determining the first motion trend based on first data collected by a sensor of the carrier includes: determining orientations of the first target at a plurality of time points based on the first data; and determining the first motion trend based on the orientations of the first target at the plurality of time points.

For example, when a motion trend of the vehicle 2 relative to the vehicle 1 within 1s is determined, orientations of the vehicle 2 relative to the vehicle 1 at 100 time points may be collected at a time interval of 10 ms. The motion trend of the vehicle 2 relative to the vehicle 1 may be obtained based on the orientations of the vehicle 2 relative to the vehicle 1 at 100 time points.

Optionally, the carrier includes a mapping relationship between a motion trend and a sound-making apparatus, and the method 1500 further includes: determining the at least two sound-making apparatuses based on the mapping relationship and the first motion trend.

For example, the mapping relationship may be shown in Table 7 or Table 8.

Optionally, the method 1500 further includes: controlling a lighting direction of an atmosphere light, where the lighting direction of the atmosphere light corresponds to the first motion trend, and the carrier includes the atmosphere light; and/or controlling a vibration direction of a steering wheel, where the vibration direction corresponds to the first motion trend, and the carrier includes the steering wheel; and/or controlling a display apparatus to display prompt information, where the prompt information indicates the first motion trend, and the carrier includes the display apparatus.

For example, as shown in FIG. 13, when it is detected that a target is within an alarm range of the vehicle and the target moves from the rear of a vehicle door on the left of a second row to the front, the loudspeaker 1013 and the loudspeaker 1015 may be controlled to make sound image shift alert tones, and a light gradient direction in the light strip 1310 is controlled to change from the light bead 1311 to the light bead 1312.

For example, as shown in FIG. 14, when it is detected that the vehicle 2 enters an alarm area of the vehicle 1 and the vehicle 2 moves from the right of a head of the vehicle 1 to the left, the loudspeakers 241 to 243 may be controlled to make alert tones whose sound image shift directions are from the loudspeaker 241 to the loudspeaker 243, and the steering wheel is controlled to vibrate counterclockwise.

Optionally, the controlling at least two sound-making apparatuses in the plurality of sound-making apparatuses to make alert tones includes: controlling intensity of sounds made by sound-making apparatuses in the at least two sound-making apparatuses, and/or controlling delays of the sounds made by the sound-making apparatuses in the at least two sound-making apparatuses.

For a process of controlling the intensity and/or delays of the sounds made by the sound-making apparatuses, reference may be made to the description in the foregoing embodiment, and details are not described herein again.

Optionally, the plurality of sound-making apparatuses are located in a cockpit of the carrier.

Optionally, the plurality of sound-making apparatuses may also be located outside a cockpit of the carrier.

For example, as shown in FIG. 12, when a user standing still near the parking space 1 is detected based on data collected by a sensor outside the cockpit, the loudspeaker 1201 and the loudspeaker 1202 outside the cockpit may be controlled to make sound image shift alert tones. A sound image shift direction of the alert tone may point from a head position of the vehicle 1 to a position of the still standing user, or a sound image shift direction of the alert tone may point from the loudspeaker 1201 to the loudspeaker 1202. In this way, the still standing user can learn that the vehicle 1 is approaching the user. Therefore, avoidance can be performed on the vehicle 1 in a timely manner.

An embodiment of this application further provides a control method. The method includes: detecting that a vehicle departs from a first mark line of a lane in which the vehicle is located, where the vehicle includes a plurality of sound-making apparatuses; and controlling at least two sound-making apparatuses in the plurality of sound-making apparatuses to make sound image shift alert tones, where a sound image shift direction of the alert tone is a direction close to the first mark line, or a sound image shift direction of the alert tone is a direction away from the first mark line.

Optionally, the detecting that a vehicle departs from a first mark line of a lane in which the vehicle is located includes: detecting that a distance between the vehicle and the first mark line gradually decreases.

Optionally, when the sound image shift direction of the alert tone is the direction close to the first mark line, the alert tone may be used to inform the user that the vehicle is approaching the first mark line.

Optionally, when the sound image shift direction of the alert tone is the direction away from the first mark line, the alert tone may be used to inform the user to drive the vehicle in the direction away from the first mark line, or prompt the user to drive toward a center line position of the lane.

An embodiment of this application further provides an apparatus for implementing any one of the foregoing methods. For example, an apparatus is provided, including a carrier (for example, a vehicle) for implementing any one of the foregoing methods, a computing platform in a vehicle, a SoC on the computing platform, or a unit (or means) of each step performed by a processor on the computing platform.

FIG. 16 is a block diagram of a control apparatus 1600 according to an embodiment of this application. As shown in FIG. 16, the apparatus 1600 includes: a detection unit 1610, configured to detect that a first target is within an alarm range of a carrier, where the carrier includes a plurality of sound-making apparatuses; and a control unit 1620, configured to control at least two sound-making apparatuses in the plurality of sound-making apparatuses to make alert tones, where a sound image shift direction of the alert tone corresponds to a first motion trend, and the first motion trend includes a relative motion trend of the carrier and the first target.

Optionally, the control unit 1620 is further configured to control a sound image shift speed of the alert tone.

Optionally, the control unit 1620 is configured to control the sound image shift speed of the alert tone based on information between the carrier and the first target.

Optionally, the information between the carrier and the first target includes at least one of the first motion trend, an alarm level, a distance between the carrier and the first target, and time to collision TTC between the carrier and the first target.

Optionally, the apparatus 1600 further includes: a first determining unit, configured to determine, based on a position of a prompted user, a sound-making apparatus located at an end of the sound image shift direction in the at least two sound-making apparatuses.

Optionally, the apparatus 1600 further includes: a second determining unit, configured to determine, based on an orientation of the first target relative to the carrier in a case in which the first target enters the alarm range, a sound-making apparatus located at a start of the sound image shift direction in the at least two sound-making apparatuses.

Optionally, the apparatus 1600 further includes: a prediction unit, configured to predict the first motion trend based on a status of the first target. The control unit is configured to control, based on the predicted first motion trend, the at least two sound-making apparatuses in the plurality of sound-making apparatuses to make the alert tones.

Optionally, the control unit 1620 is further configured to: when the predicted first motion trend is different from an actual relative motion trend of the first target and the carrier, control at least two sound-making apparatuses in the plurality of sound-making apparatuses to make alert tones whose sound image shift directions correspond to the actual relative motion trend.

Optionally, the apparatus 1600 further includes: a third determining unit, configured to determine the first motion trend based on first data collected by a sensor of the carrier; or the third determining unit, configured to obtain second data sent by a cloud server, and determine the first motion trend based on the second data.

Optionally, the third determining unit is configured to: determine orientations of the first target at a plurality of time points based on the first data; and determine the first motion trend based on the orientations of the first target at the plurality of time points.

Optionally, the carrier includes a mapping relationship between a motion trend and a sound-making apparatus, and the method further includes: determining the at least two sound-making apparatuses based on the mapping relationship and the first motion trend.

Optionally, the control unit 1620 is further configured to: control a lighting direction of an atmosphere light, where the lighting direction of the atmosphere light corresponds to the first motion trend, and the carrier includes the atmosphere light; and/or control a vibration direction of a steering wheel, where the vibration direction corresponds to the first motion trend, and the carrier includes the steering wheel; and/or control a display apparatus to display prompt information, where the prompt information indicates the first motion trend, and the carrier includes the display apparatus.

Optionally, the detection unit 1610 is configured to: when the distance between the carrier and the first target is less than or equal to a preset distance, and/or the TTC between the carrier and the first target is less than or equal to preset duration, detect that the first target is within the alarm range of the carrier.

Optionally, the control unit 1620 is configured to: control intensity of sounds made by sound-making apparatuses in the at least two sound-making apparatuses, and/or control delays of the sounds made by the sound-making apparatuses in the at least two sound-making apparatuses.

Optionally, the plurality of sound-making apparatuses are located in a cockpit of the carrier.

For example, the detection unit 1610 may be the computing platform in FIG. 1, or a processing circuit, a processor, or a controller on the computing platform in FIG. 1. For example, the detection unit 1610 is the processor 151 on the computing platform, and the processor 151 may detect whether the first target is within the alarm range of the carrier. For example, the processor 151 may obtain sensor data collected by a sensor outside the cockpit, and determine, based on the sensor data, whether the first target enters the alarm range of the carrier. For another example, the processor 151 may further determine a motion trend of the first target relative to the carrier based on the sensor data.

For another example, the control unit 1620 may be the computing platform in FIG. 1, or a processing circuit, a processor, or a controller on the computing platform in FIG. 1. For example, the control unit 1620 is the processor 152 on the computing platform. When the processor 151 determines that the first target enters the alarm range of the carrier, the processor 151 may send indication information and a motion trend of the first target to the processor 152. The indication information indicates that the first target enters the alarm range of the carrier. The processor 152 may control, based on the indication information and the motion trend of the first target, the at least two sound-making apparatuses to make sound image shift alert tones. A sound image shift direction of the alert tone corresponds to the first motion trend.

For another example, the processor 152 may further control a sound image shift speed of the alert tone.

For another example, the foregoing prediction unit may be the computing platform in FIG. 1, or a processing circuit, a processor, or a controller on the computing platform. For example, the prediction unit is the processor 15n on the computing platform. The processor 15n may determine the status of the first target based on the sensor data collected by the sensor outside the cockpit of the carrier, and predict the motion trend of the first target relative to the carrier in a future time period based on the status of the first target.

The functions implemented by the detection unit 1610 and the functions implemented by the control unit 1620 may be implemented by different processors, or may be implemented by a same processor. This is not limited in this embodiment of this application.

It should be understood that division of the units in the foregoing apparatus is merely logical function division. During an actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a CPU or a microprocessor, and the memory is a memory in the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In this embodiment of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by using an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, these units are integrated together and implemented in a form of a SoC. The SoC may include at least one processor, configured to implement any one of the foregoing methods or implement functions of the units in the apparatus. Types of the at least one processor may be different, for example, including a CPU and an FPGA, a CPU and an artificial intelligence processor, or a CPU and a GPU.

An embodiment of this application further provides an apparatus. The apparatus includes a processing unit and a storage unit. The storage unit is configured to store instructions, and the processing unit executes the instructions stored in the storage unit, so that the apparatus performs the method or the steps performed in the foregoing embodiments.

Optionally, if the apparatus is located in a carrier, the processing unit may be the processors 151 to 15n shown in FIG. 1.

FIG. 17 is a block diagram of a control system 1700 according to an embodiment of this application. As shown in FIG. 17, the control system 1700 includes at least two sound-making apparatuses and a computing platform. The computing platform may include the foregoing control apparatus 1600.

Optionally, the control system 1700 further includes one or more sensors.

An embodiment of this application further provides a carrier. The carrier may include the control apparatus 1600 or the control system 1700.

Optionally, the carrier may be a vehicle.

An embodiment of this application further provides a computer program product. The computer program product includes computer program code, and when the computer program code is run on a computer, the computer is enabled to perform the method.

An embodiment of this application further provides a computer-readable medium. The computer-readable medium stores program code, and when the computer program code is run on a computer, the computer is enabled to perform the method.

In an implementation process, the steps in the foregoing methods can be completed by using an integrated logical circuit of hardware in the processor, or by using instructions in a form of software. The method of the communication disclosed with reference to embodiments of this application may be directly performed by a hardware processor, or may be performed by using a combination of hardware in a processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on this understanding, the technical solutions of this application essentially, part contributing to the conventional technology, or some of the technical solutions may be implemented in a form of a software product. A computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this

application shall fall within the protection scope of this application. Therefore, the protection scope of this application shall be subject to the protection scope of the claims.

## Claims

1. A control method, comprising:
detecting that a first target is within an alarm range of a carrier, wherein the carrier comprises a plurality of sound-making apparatuses; and
controlling at least two sound-making apparatuses in the plurality of sound-making apparatuses to make alert tones, wherein a sound image shift direction of the alert tone corresponds to a first motion trend, and the first motion trend comprises a relative motion trend of the carrier and the first target.

2. The method according to claim 1, wherein the method further comprises:
controlling a sound image shift speed of the alert tone.

3. The method according to claim 2, wherein the controlling a sound image shift speed of the alert tone comprises:
controlling the sound image shift speed of the alert tone based on information between the carrier and the first target.

4. The method according to claim 3, wherein the information between the carrier and the first target comprises at least one of the first motion trend, an alarm level, a distance between the carrier and the first target, and time to collision TTC between the carrier and the first target.

5. The method according to any one of claims 1 to 4, wherein the method further comprises:
determining, based on a position of a prompted user, a sound-making apparatus located at an end of the sound image shift direction in the at least two sound-making apparatuses.

6. The method according to any one of claims 1 to 5, wherein the method further comprises:
determining, based on an orientation of the first target relative to the carrier in a case in which the first target enters the alarm range, a sound-making apparatus located at a start of the sound image shift direction in the at least two sound-making apparatuses.

7. The method according to any one of claims 1 to 6, wherein the method further comprises:
predicting the first motion trend based on a status of the first target; and
the controlling at least two sound-making apparatuses in the plurality of sound-making apparatuses to make alert tones comprises:
controlling, based on the predicted first motion trend, the at least two sound-making apparatuses in the plurality of sound-making apparatuses to make the alert tones.

8. The method according to claim 7, wherein the method further comprises:
when the predicted first motion trend is different from an actual relative motion trend of the first target and the carrier, controlling at least two sound-making apparatuses in the plurality of sound-making apparatuses to make alert tones whose sound image shift directions correspond to the actual relative motion trend.

9. The method according to any one of claims 1 to 6, wherein the method further comprises:
determining the first motion trend based on first data collected by a sensor of the carrier; or
obtaining second data sent by a cloud server, and determining the first motion trend based on the second data.

10. The method according to claim 9, wherein the determining the first motion trend based on first data collected by a sensor of the carrier comprises:
determining orientations of the first target at a plurality of time points based on the first data; and
determining the first motion trend based on the orientations of the first target at the plurality of time points.

11. The method according to any one of claims 1 to 10, wherein the carrier comprises a mapping relationship between a motion trend and a sound-making apparatus, and the method further comprises:
determining the at least two sound-making apparatuses based on the mapping relationship and the first motion trend.

12. The method according to any one of claims 1 to 11, wherein the method further comprises:
controlling a lighting direction of an atmosphere light, wherein the lighting direction of the atmosphere light corresponds to the first motion trend, and the carrier comprises the atmosphere light; and/or
controlling a vibration direction of a steering wheel, wherein the vibration direction corresponds to the first motion trend, and the carrier comprises the steering wheel; and/or
controlling a display apparatus to display prompt information, wherein the prompt information indicates the first motion trend, and the carrier comprises the display apparatus.

13. The method according to any one of claims 1 to 12, wherein the detecting that a first target is within an alarm range of a carrier comprises:
when the distance between the carrier and the first target is less than or equal to a preset distance, and/or the TTC between the carrier and the first target is less than or equal to preset duration, detecting that the first target is within the alarm range of the carrier.

14. The method according to any one of claims 1 to 13, wherein the controlling at least two sound-making apparatuses in the plurality of sound-making apparatuses to make alert tones comprises:
controlling intensity of sounds made by sound-making apparatuses in the at least two sound-making apparatuses, and/or controlling delays of the sounds made by the sound-making apparatuses in the at least two sound-making apparatuses.

15. The method according to any one of claims 1 to 14, wherein the plurality of sound-making apparatuses are located in a cockpit of the carrier.

16. A control apparatus, comprising:
a detection unit, configured to detect that a first target is within an alarm range of a carrier, wherein the carrier comprises a plurality of sound-making apparatuses; and
a control unit, configured to control at least two sound-making apparatuses in the plurality of sound-making apparatuses to make alert tones, wherein a sound image shift direction of the alert tone corresponds to a first motion trend, and the first motion trend comprises a relative motion trend of the carrier and the first target.

17. The apparatus according to claim 16, wherein the control unit is further configured to:
control a sound image shift speed of the alert tone.

18. The apparatus according to claim 17, wherein the control unit is configured to:
control the sound image shift speed of the alert tone based on information between the carrier and the first target.

19. The apparatus according to claim 18, wherein the information between the carrier and the first target comprises at least one of the first motion trend, an alarm level, a distance between the carrier and the first target, and time to collision TTC between the carrier and the first target.

20. The apparatus according to any one of claims 16 to 19, wherein the apparatus further comprises:
a first determining unit, configured to determine, based on a position of a prompted user, a sound-making apparatus located at an end of the sound image shift direction in the at least two sound-making apparatuses.

21. The apparatus according to any one of claims 16 to 20, wherein the apparatus further comprises:
a second determining unit, configured to determine, based on an orientation of the first target relative to the carrier in a case in which the first target enters the alarm range, a sound-making apparatus located at a start of the sound image shift direction in the at least two sound-making apparatuses.

22. The apparatus according to any one of claims 16 to 21, wherein the apparatus further comprises:
a prediction unit, configured to predict the first motion trend based on a status of the first target; and
the control unit is configured to control, based on the predicted first motion trend, the at least two sound-making apparatuses in the plurality of sound-making apparatuses to make the alert tones.

23. The apparatus according to claim 22, wherein the control unit is further configured to:
when the predicted first motion trend is different from an actual relative motion trend of the first target and the carrier, control at least two sound-making apparatuses in the plurality of sound-making apparatuses to make alert tones whose sound image shift directions correspond to the actual relative motion trend.

24. The apparatus according to any one of claims 16 to 21, wherein the apparatus further comprises:
a third determining unit, configured to determine the first motion trend based on first data collected by a sensor of the carrier; or
a third determining unit, configured to: obtain second data sent by a cloud server, and determine the first motion trend based on the second data.

25. The apparatus according to claim 24, wherein the third determining unit is configured to:
determine orientations of the first target at a plurality of time points based on the first data; and
determine the first motion trend based on the orientations of the first target at the plurality of time points.

26. The apparatus according to any one of claims 16 to 25, wherein the carrier comprises a mapping relationship between a motion trend and a sound-making apparatus, and the method further comprises:
determining the at least two sound-making apparatuses based on the mapping relationship and the first motion trend.

27. The apparatus according to any one of claims 16 to 26, wherein the control unit is further configured to:
control a lighting direction of an atmosphere light, wherein the lighting direction of the atmosphere light corresponds to the first motion trend, and the carrier comprises the atmosphere light; and/or
control a vibration direction of a steering wheel, wherein the vibration direction corresponds to the first motion trend, and the carrier comprises the steering wheel; and/or
control a display apparatus to display prompt information, wherein the prompt information indicates the first motion trend, and the carrier comprises the display apparatus.

28. The apparatus according to any one of claims 16 to 27, wherein the detection unit is configured to:
when the distance between the carrier and the first target is less than or equal to a preset distance, and/or the TTC between the carrier and the first target is less than or equal to preset duration, detect that the first target is within the alarm range of the carrier.

29. The apparatus according to any one of claims 16 to 28, wherein the control unit is configured to:
control intensity of sounds made by sound-making apparatuses in the at least two sound-making apparatuses, and/or control delays of the sounds made by the sound-making apparatuses in the at least two sound-making apparatuses.

30. The apparatus according to any one of claims 16 to 29, wherein the plurality of sound-making apparatuses are located in a cockpit of the carrier.

31. A control apparatus, comprising:
a memory, configured to store a computer program; and
a processor, configured to execute the computer program stored in the memory, to enable the apparatus to perform the method according to any one of claims 1 to 15.

32. A control system, comprising at least two sound-making apparatuses and a computing platform, wherein the computing platform comprises the apparatus according to any one of claims 16 to 31.

33. A carrier, comprising the control apparatus according to any one of claims 16 to 31, or comprising the control system according to claim 32.

34. The carrier according to claim 33, wherein the carrier is a vehicle.

35. A computer-readable storage medium, wherein the computer-readable storage medium stores a computer program; and when the computer program is executed by a computer, the method according to any one of claims 1 to 15 is implemented.

36. A chip, wherein the chip comprises a processor and a data interface, and the processor reads, through the data interface, instructions stored in a memory, to perform the method according to any one of claims 1 to 15.
